# EUROPEAN PATENT APPLICATION

(11) **EP 3 361 739 A1**
(43) Date of publication of application: **15.08.2018**
(21) Application number: 16853588.8
(22) Date of filing: 04.10.2016
(51) Int. Cl.: H04N 21/431, G09G 5/00, G09G 5/36, G09G 5/377, G09G 5/391, G09G 5/393, H04N 21/435

(54) **INFORMATION PROCESSING APPARATUS, INFORMATION PROCESSING METHOD, AND PROGRAM**

(30) Priority: 09.10.2015 JP 2015201101
(71) Applicant: Sony Corporation, Tokyo 108-0075 (JP)
(72) Inventor: DEWA, Yoshiharu, Tokyo 108-0075 (JP); TSUKAGOSHI, Ikuo, Tokyo 108-0075 (JP)
(74) Representative: 2SPL Patentanwälte PartG mbB
(86) International application number: PCT/JP2016/079518
(87) International publication number: WO 2017/061434

(57) **Abstract**

A configuration in which low-resolution graphic data generated in accordance with a script is displayed in combination with high-resolution image data, is achieved. In performing generation processing of graphic data in accordance with the script described in an HTML document, a graphic drawing data generation unit generates the low-resolution graphic data having resolution lower than resolution based on the description of the script and then stores the lower-resolution graphic data into a drawing memory. An image transform unit expands the low-resolution graphic data in the drawing memory to transform the low-resolution graphic data by a size the same as that of high-resolution graphic data. After that, the low-resolution graphic data is output in combination with, for example, other high-resolution image data.

## Description

### TECHNICAL FIELD

The present disclosure relates to an information processing device, and an information processing method, and a program. More particularly, the present disclosure relates to an information processing device that superimposes and displays graphic data generated by executing a script (a program), onto data for display including images, characters and the like, and an information processing method, and a program.

### BACKGROUND ART

Recently, as the resolution of image data progressively improves, high definition (HD) images being high-quality images, namely, hi-vision-compliant 2K images are widely used for images recorded in a medium or image data provided by a broadcast station.

It is predicted that further improvement in high image quality is made in the future and the use of ultra high definition (UHD) images increases, such as 4K images or 8K images, each including the number of pixels increased.

In addition, a recent broadcast service has a configuration in which a transmission device can transmit, for example, animations, still images, moving images, or text data allowed to be displayed with an application, to a reception device, such as a television, and the reception device can execute the application to superimpose and display various types of additional information onto a normal broadcast program.

As one configuration for achieving such a service, the use of a browser in a reception device, such as a television, is provided.

A large number of reception devices, such as recent televisions, each have a browser execution function and can perform processing of generating display data based on a hyper text markup language (HTML) description with an HTML file transmitted from, for example, a broadcast station, to display various types of data along with a normal broadcast program.

Note that, examples of a document disclosing a conventional technology regarding image display processing with a browser, include Patent Document 1 (Japanese Patent Application Laid-Open No. 2007-133898) and Patent Document 2 (Japanese Patent Application Laid-Open No. 2015-099340).

In conventional typical data broadcasting or the like, for example, a relatively small image size of 960 × 540 pixels is often used for the output image size of a browser.

In recent years, a browser having an image size of 1920 × 1080 pixels (Hybridcast) being a larger image size, has been progressively developed for practical use.

In the current situation in which 4K televisions each capable of outputting a 4K image of 3840 × 2160 pixels have been progressively widespread, the respective browser functions installed in televisions of makers, are different from each other.

For example, (a) televisions each including a 2K browser having a function of outputting an image of 1920 × 1080 pixels, installed, and (b) televisions each including a 4K browser having a function of outputting an image of 3840 × 2160 pixels, installed, are provided, and the televisions including the different browsers, have been sold.

Furthermore, there is a possibility that (c) televisions each including an 8K browser having a function of outputting an image of 7680 × 4320 pixels, installed, are to be developed and used in the future.

However, typical televisions each have an available memory capacity smaller and a data processing function lower than those of data processing devices, such as PCs. Therefore, even when image display is attempted with, for example, the 4K browser or the 8K browser described above, smooth display cannot necessarily be made.

Therefore, in a case where a script (a program) is executed to generate and display graphic data on the reception device side, such as a television, the following problems become increasingly likely to occur that the generation load of the graphic data excessively increases and additionally the capacity of a drawing memory that stores high-resolution graphic data, becomes insufficient.

### CITATION LIST

### PATENT DOCUMENT

Patent Document 1: Japanese Patent Application Laid-Open No. 2007-133898
Patent Document 2: Japanese Patent Application Laid-Open No. 2015-099340

### SUMMARY OF THE INVENTION

### PROBLEMS TO BE SOLVED BY THE INVENTION

The present disclosure has been made in consideration of, for example, the above problems, and an object of the present disclosure is to provide, for an information processing device, such as a television, having an available memory capacity small and data throughput low, an information processing device capable of certainly generating and displaying various types of graphic data along with a high-resolution image, such as a 4K image or an 8K image, and an information processing method, and a program.

### SOLUTIONS TO PROBLEMS

According to a first aspect of the present disclosure, an information processing device includes: a graphic drawing data generation unit configured to perform generation processing of graphic data; and a composition unit configured to combine the graphic data generated by the graphic drawing data generation unit and image data, to generate a composite image for display-unit output. The graphic drawing data generation unit generates low-resolution graphic data having resolution lower than resolution based on a description of a script, in the generation processing of the graphic data based on the script, and the composition unit generates the composite image for display-unit output, with expanded data of the low-resolution graphic data.

Furthermore, according to a second aspect of the present disclosure, an information processing method performed in an information processing device including: a graphic drawing data generation unit configured to perform generation processing of graphic data; and a composition unit configured to combine the graphic data generated by the graphic drawing data generation unit and image data to generate a composite image for display-unit output, includes: generating low-resolution graphic data having resolution lower than resolution based on a description of a script, by the graphic drawing data generation unit, in the generation processing of the graphic data based on the script, and generating the composite image for display-unit output, by the composition unit with expanded data of the low-resolution graphic data.

Furthermore, according to a third aspect of the present disclosure, a program for causing information processing to be performed in an information processing device including: a graphic drawing data generation unit configured to perform generation processing of graphic data; and a composition unit configured to combine the graphic data generated by the graphic drawing data generation unit and image data to generate a composite image for display-unit output, causes: the graphic drawing data generation unit to generate low-resolution graphic data having resolution lower than resolution based on a description of a script, in the generation processing of the graphic data based on the script; and the composition unit to generate the composite image for display-unit output, with expanded data of the low-resolution graphic data.

Note that, the program according to the present disclosure can be provided to, for example, an information processing device or a computer system capable of executing various program codes, through a storage medium or a communication medium that makes provision in a computer-readable format. The program is provided in the computer-readable format, so that processing based on the program is achieved on the information processing device or the computer system.

The features, the advantages, and another different object according to the present disclosure, will be clear with the embodiments to be described later according to the present disclosure and the more detailed descriptions based on the attached drawings. Note that, a system in the present specification is a logical aggregate configuration including a plurality of devices, but is not limited to a configuration including the constituent devices in the same housing.

### EFFECTS OF THE INVENTION

According to one embodiment of the present disclosure, a configuration in which low-resolution graphic data generated in accordance with a script is displayed in combination with high-resolution image data, is achieved.

Specifically, in performing generation processing of graphic data in accordance with the script described in an HTML document, a graphic drawing data generation unit generates the low-resolution graphic data having resolution lower than resolution based on the description of the script and stores the low-resolution graphic data into a drawing memory. An image transform unit expands the low-resolution graphic data in the drawing memory to transform the low-resolution graphic data by a size the same as that of high-resolution graphic data. After that, the low-resolution graphic data is output in combination with, for example, other high-resolution image data.

With the present configuration, the configuration in which the low-resolution graphic data generated in accordance with the script is displayed in combination with the high-resolution image data, is achieved.

Note that the effects described in the present specification are, but are not limited to, just exemplifications, and thus additional effects may be provided.

### BRIEF DESCRIPTION OF DRAWINGS

Fig. 1 is a diagram for describing an exemplary configuration of a communication system.
Fig. 2 is a diagram for describing exemplary processing performed in reception and transmission.
Fig. 3 is a diagram for describing exemplary processing performed in the reception and transmission.
Fig. 4 is a diagram for describing exemplary processing performed in the reception and transmission.
Fig. 5 is a diagram for describing an exemplary configuration and processing performed in the reception and transmission.
Fig. 6 is a table for describing an exemplary HTML document.
Fig. 7 is a table for describing an exemplary style sheet.
Fig. 8 is a table for describing an exemplary script.
Fig. 9 is a table for describing an exemplary script.
Fig. 10 is a table for describing the exemplary script.
Fig. 11 is a flowchart for describing a processing sequence performed by a reception device being an information processing device according to the present disclosure.
Fig. 12 is a flowchart for describing a processing sequence performed by the reception device being the information processing device according to the present disclosure.
Fig. 13 is a flowchart for describing a processing sequence performed by the reception device being the information processing device according to the present disclosure.
Fig. 14 is a diagram for describing an exemplary hardware configuration of the reception device being the information processing device according to the present disclosure.

### MODE FOR CARRYING OUT THE INVENTION

An information processing device, and an information processing method, and a program according to the present disclosure, will be described in detail below with reference to the drawings. Note that, the descriptions will be given in accordance with the following items.
1. Exemplary Configuration of Communication System
2. Exemplary Image Output with Browser in Reception Device
3. Problem in Image Output Processing with Browser in Reception Device
4. Exemplary Configuration Having Problem in Image Output Processing with Browser in Reception Device, Solved
5. Processing Sequence Performed by Information Processing Device (Reception Device) According to Present Disclosure
6. Embodiment Including Performance of Necessity Determination of Resolution Reduction Processing and Performance of Processing based on Determined Result, in Drawing Processing of Graphic Data
7. Exemplary Configuration of Information Processing Device
8. Summary of Configuration of Present Disclosure

### [1. Exemplary Configuration of Communication System]

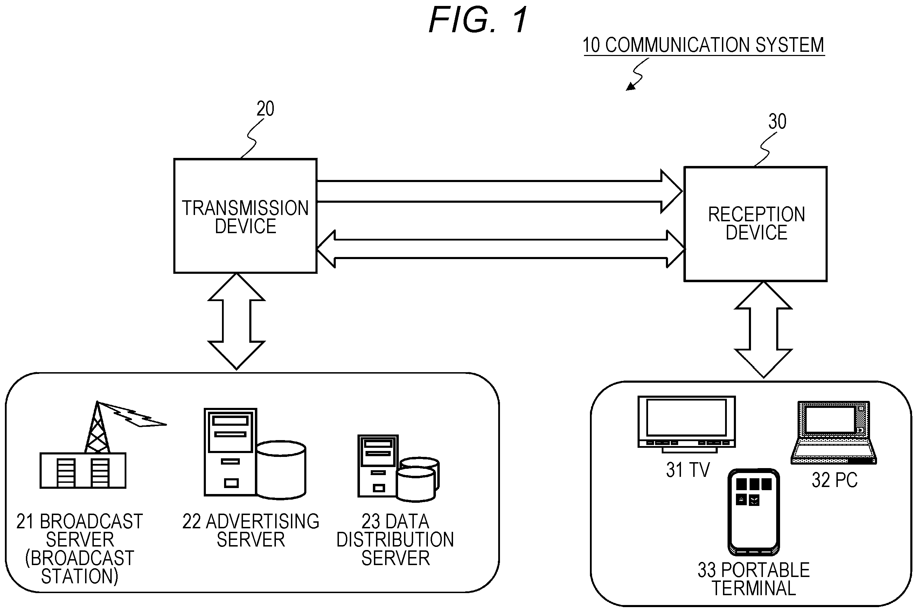

First, an exemplary configuration of a communication system that performs processing according to the present disclosure, will be described with reference to Fig. 1.

As illustrated in Fig. 1, the communication system 10 includes a transmission device 20 being a communication device that transmits content, such as image data and audio data, and a reception device 30 being a communication device that receives the content transmitted by the transmission device 20.

The transmission device 20 is on the side of devices that provide various types of content (broadcast programs, advertisements, and other data), the devices specifically including, for example, a broadcast server (a broadcast station) 21 that transmits mainly TV programs or the like, an advertising server 22 that transmits mainly advertising data, and data distribution server 23 that transmits various types of data.

Meanwhile, the reception device 30 is a client device for a general user, and specifically includes, for example, a television 31, a PC 32, or a portable terminal 33.

Note that, Fig. 1 distinctively illustrates the broadcast server (the broadcast station) 21, the advertising server 22, and the data distribution server 23 as examples of the transmission device 20, but one server may be configured to transmit all the broadcast programs, the advertisements, and the other data.

Data communication between the transmission device 20 and the reception device 30 is performed with at least any of interactive communication and unidirectional communication through a network, such as the Internet, and unidirectional communication with, for example, a broadcast wave, or the two.

The transmission device 20 transmits normal program content and further transmits, for example, data to be superimposed and displayed onto a normal program and a display processing program for data broadcasting, animation display and the like, to the reception device 30.

Specifically, various types of data including, for example, a hyper text markup language (HTML) file, other image data, and an application program (a script), are transmitted.

The reception device 30 performs processing of outputting the normal program content to an output unit, such as a display unit or a speaker. In addition, the reception device 30 has a browser execution function and interprets the HTML document file to output output data based on descriptive data of the HTML document file, to the output unit including the display unit, the speaker and the like.

A browser is an application program for browsing, for example, a Web page, and is a program for combining an HTML document file, an image file, an audio file, and a script (a program) including a Java (registered trademark) script file, to generate output information including images, audio, animations and the like.

The reception device 30 executes the browser, so that the display unit of the reception device can superimpose and display, for example, various moving images, still images, and animations along with a normal broadcast program.

### [2. Exemplary Image Output with Browser in Reception Device]

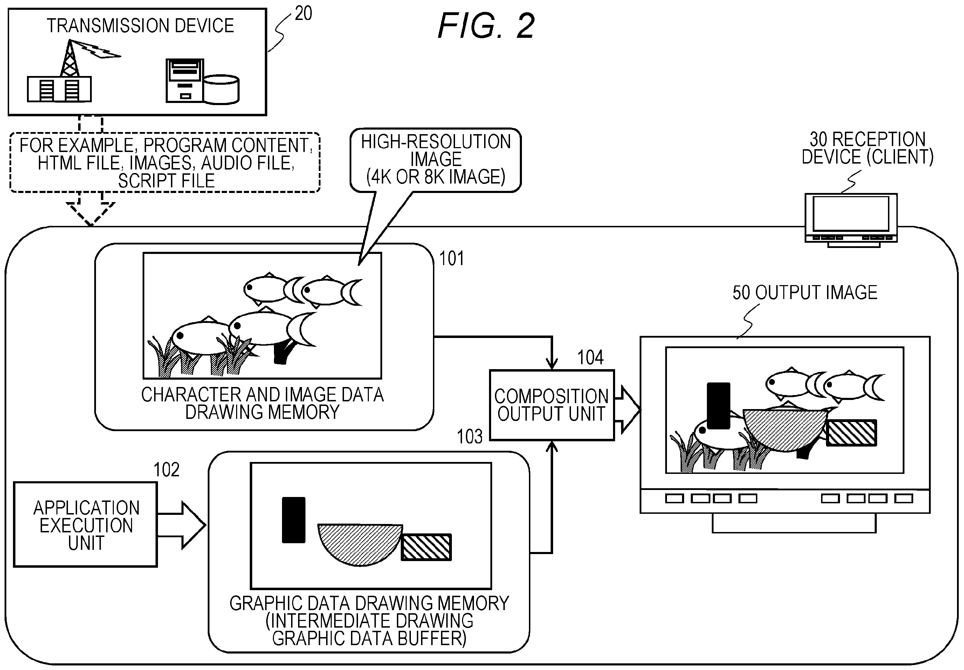

Next, exemplary image output with the browser in the reception device 30, such as the television or the portable terminal, will be described with reference to Fig. 2 and subsequent drawings.

Fig. 2 is a diagram illustrating exemplary image display processing with the browser in the reception device 30.

The transmission device 20, such as the broadcast station, transmits various types of data to be used for generating display data with the browser along with the normal program content, to the reception device 30.

For example, an HTML document file, an image file, an audio file, and furthermore a script file including a Java (registered trademark) script capable of executing a program execution function such as animation display processing on the browser, are transmitted.

The reception device 30 generates and displays an output image 50 illustrated in Fig. 2, with the various types of data.

The normal program content is temporarily stored in a character and image data drawing memory 101 illustrated in the figure.

Each piece of data, such as images, characters, and audio included in the program content transmitted by the transmission device 20, includes compressed and encoded data, and the reception device 30 performs processing of decoding the encoded data to store a decoded result into the character and image data drawing memory 101.

Furthermore, the reception device 30 inputs, for example, the HTML document file, the image file, and the audio file received from the transmission device 20, into an application execution unit 102.

The application execution unit 102 analyzes the HTML document file received from the transmission device 20, to generate output data based on the description of the HTML document file.

The HTML document file includes various types of information, such as a style sheet for prescribing the style of the output data, information regarding images, audio, text and the like included in the output data, and furthermore, for example, a script (a program) for generating graphic data and the Java (registered trademark) script for achieving the animation execution function, and the application execution unit 102 generates the output data with the various types of information.

Note that, "graphic data" in the present specification is data for display, generated in accordance with the description of a script.

Specifically, for example, the data for display includes two-dimensional (2D) or three-dimensional (3D) graphic data calculated by applying coordinate data described in the script included in the HTML document.

Note that, the script is a program (an application) executable on the browser capable of generating various types of output data.

Fig. 2 illustrates exemplary utilization of a script for generating rectangular and semicircular graphic data.

The script for generating the rectangular and semicircular graphic data illustrated in Fig. 2, includes various types of drawing specifying information (also referred to as drawing orders or drawing commands), such as an apex coordinate data prescribing a rectangular shape for generating rectangular drawing data, outline colors, modes (e.g., a solid line or a dotted line), and drawing modes inside outlines (e.g., a fill color).

The application execution unit (a script execution unit) 102 generates various types of graphic data in accordance with the drawing specifying information. The graphic data that has been generated, is stored into a graphic data drawing memory (an intermediate drawing graphic data buffer) 103 illustrated in Fig. 2.

A composition output unit 104 performs composition processing (superimposition processing) between the program content stored in the character and image data drawing memory 101 and the graphic data stored in the graphic data drawing memory (the intermediate drawing graphic data buffer) 103, to output a composite image as the output image 50 to the display unit of the reception device 30. The output image 50 is a displayed image on the browser.

### [3. Problem in Image Output Processing with Browser in Reception Device]

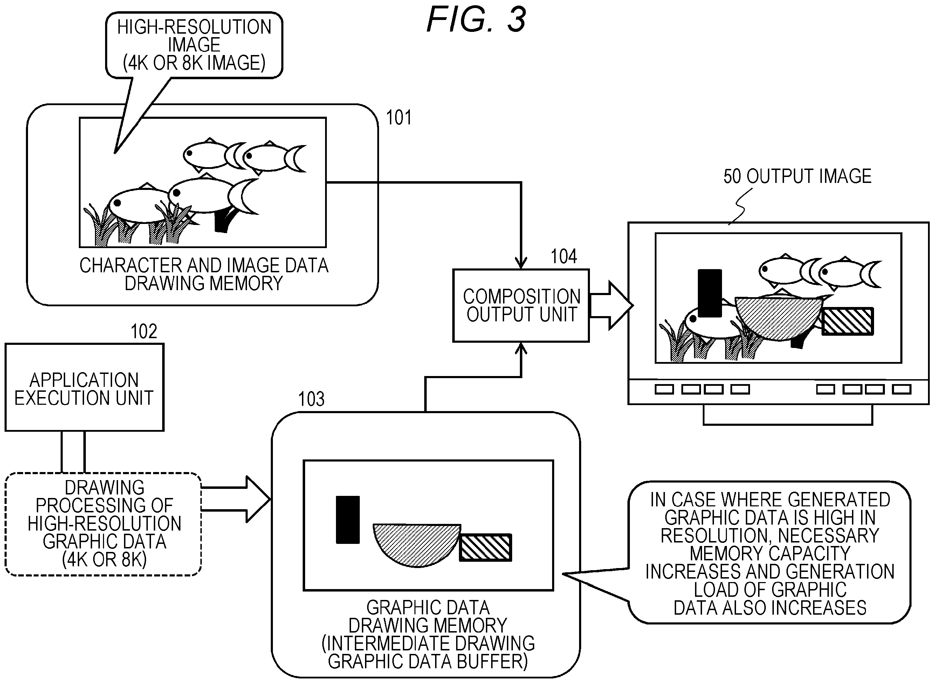

Next, a problem in image output processing with the browser in the reception device 30, such as the television or the portable terminal, will be described with reference to Fig. 3 and subsequent drawings.

As described above, conventionally, for example, a relatively small image size of 960 × 540 pixels is often used for the output image size of a browser.

However, in recent years, a browser having an image size of 1920 × 1080 pixels (Hybridcast) being a larger image size, has been progressively developed for practical use.

Furthermore, as display devices, such as televisions, have been rapidly developed for improvement in high image quality, 4K televisions and 8K televisions capable of outputting a 4K image of 3840 × 2160 pixels and an 8K image of 7680 × 4320 pixels, respectively, have been progressively used and developed.

In the situation, the output image size of a browser is required to increase in size, for example, a 4K browser having an image size the same as the 4K image of 3840 × 2160 pixels and an 8K browser having an image size the same as the 8K image of 7680 × 4320 pixels.

However, as described above, the current televisions each have an available memory capacity smaller and a data processing function lower than those of data processing devices, such as PCs.

There is a strong possibility that smooth display cannot be made even when image display is attempted with such a low-function resource together with the 4K browser or the 8K browser described above.

For example, as described with reference to Fig. 2, in the case where the reception device 30 executes the script to generate and display the graphic data, the generation load of the graphic data excessively increases and additionally the capacity of the drawing memory that stores high-resolution graphic data, becomes insufficient, and thus a problem occurs that generation and display processing of smooth graphic data cannot be performed.

Fig. 3 illustrates exemplary display data generation processing of the reception device 30 in a case where the program content transmitted from the transmission device 20, such as the broadcast station, to the reception device 30, includes a 4K or 8K high-resolution image and additionally the script recorded in the HTML document file transmitted together with the program content from the transmission device 20 to the reception device 30, is a script for 4K or 8K graphic data drawing processing.

The reception device 30 performs decoding processing of encoded data of the 4K or 8K high-resolution image transmitted from the transmission device 20, and stores high-resolution image data being a decoded result into the character and image data drawing memory 101.

Furthermore, the reception device 30 inputs the script recorded in the HTML document file received from the transmission device 20, into the application execution unit 102, and then the script is executed to generate graphic data including the 4K or 8K high-resolution image data.

The graphic data that has been generated, is stored into the graphic data drawing memory (the intermediate drawing graphic data buffer) 103 illustrated in Fig. 3.

The composition output unit 104 performs composition processing (superimposition processing) between the program content stored in the character and image data drawing memory 101 and the graphic data stored in the graphic data drawing memory (the intermediate drawing graphic data buffer) 103, to output a composite image as the output image 50 to the display unit of the reception device 30. The output image 50 is a displayed image on the browser.

During the set of processing, the application execution unit 102 must perform processing of generating the graphic data including the 4K or 8K high-resolution image data and processing of storing the high-resolution graphic data that has been generated, into the graphic data drawing memory (the intermediate drawing graphic data buffer) 103.

However, in a case where the resolution of the graphic data to be generated is high, namely, for the high-resolution graphic data including the 4K or 8K image, the load of the generation processing of the graphic data excessively increases. In addition, the memory capacity of the graphic data drawing memory (the intermediate drawing graphic data buffer) 103 is required to increase.

The reception device 30, such as the television, having an insufficient data processing resource, takes time in the generation processing of the graphic data. In addition, the reception device 30, such as the television, having a small memory capacity, cannot record (buffer) the high-resolution graphic data that has been generated. As a result, there is a risk that the graphic data cannot be output.

### [4. Exemplary Configuration Having Problem in Image Output Processing with Browser in Reception Device, Solved]

Next, an exemplary configuration in which the image output processing with the browser in the reception device is performed more certainly with the problem solved, will be described.

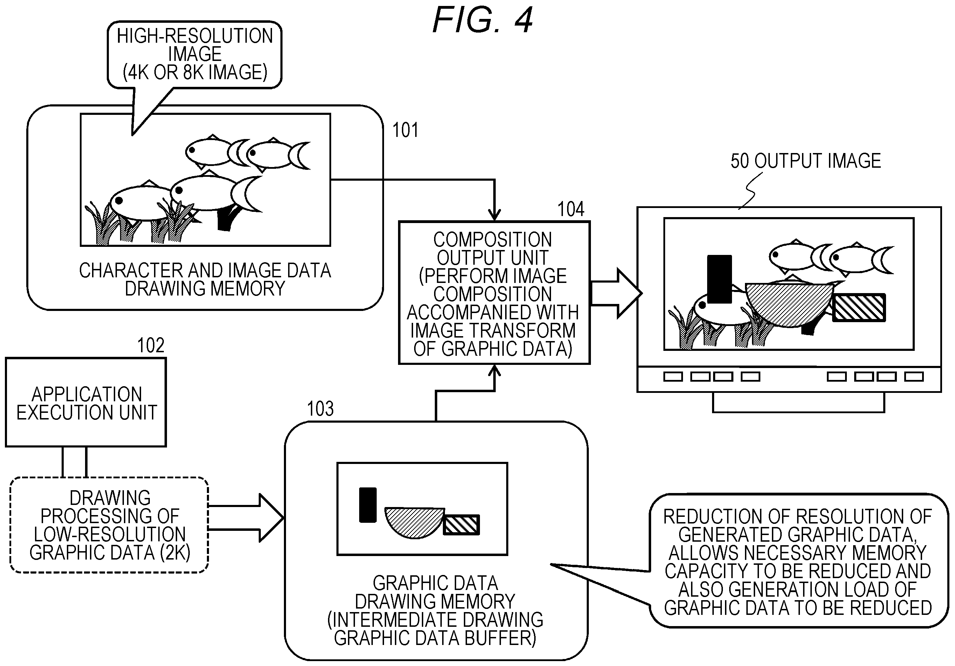

Fig. 4 is a diagram for describing exemplary image output processing with the browser in the reception device 30 according to the present disclosure.

Similarly to the example described with reference to Fig. 3, in the example illustrated in Fig. 4, the program content transmitted from the transmission device 20, such as the broadcast station, to the reception device 30, includes the 4K or 8K high-resolution image, and the script recorded in the HTML document file transmitted together with the program content from the transmission device 20 to the reception device 30, is the script for 4K or 8K high-resolution graphic data drawing processing.

The reception device 30 performs decoding processing of the encoded data of the 4K or 8K high-resolution image transmitted from the transmission device 20, and stores high-resolution image data being a decoded result into the character and image data drawing memory 101.

Furthermore, the reception device 30 inputs the script recorded in the HTML document file received from the transmission device 20, into the application execution unit 102, and then the script is executed.

Here, the application execution unit 102 generates graphic data including low-resolution image data, without generating graphic data including the 4K or 8K high-resolution image data. For example, 2K low-resolution graphic data is generated and stored into the graphic data drawing memory (the intermediate drawing graphic data buffer) 103 illustrated in Fig. 4.

The composition output unit 104 performs composition processing (superimposition processing) between the program content stored in the character and image data drawing memory 101 and the graphic data stored in the graphic data drawing memory (the intermediate drawing graphic data buffer) 103.

In the composition processing, the composition output unit 104 performs expansion processing of the low-resolution graphic data stored in the graphic data drawing memory (the intermediate drawing graphic data buffer) 103. That is, image transform (image expansion) processing is performed to make a change to the data size of the original high-resolution (4K or 8K) image, and composition processing is performed between the graphic data that has been transformed and the program content stored in the character and image data drawing memory 101, to output a composite image thereof as the output image 50 to the display unit of the reception device 30.

In the set of processing, the application execution unit 102 performs processing of generating the graphic data including, for example, the 2K low-resolution image data and processing of storing the low-resolution graphic data that has been generated, into the graphic data drawing memory (the intermediate drawing graphic data buffer) 103.

In this manner, the resolution of the graphic data to be generated is set low, so that the load of the generation processing of the graphic data can be reduced. In addition, the memory capacity of the graphic data drawing memory (the intermediate drawing graphic data buffer) 103 can be made small.

Even in the reception device 30, such as the television, having the insufficient data processing resource or memory resource, performing the processing enables the generation processing of the graphic data to be performed at high speed, so that composite image output having no error can be performed.

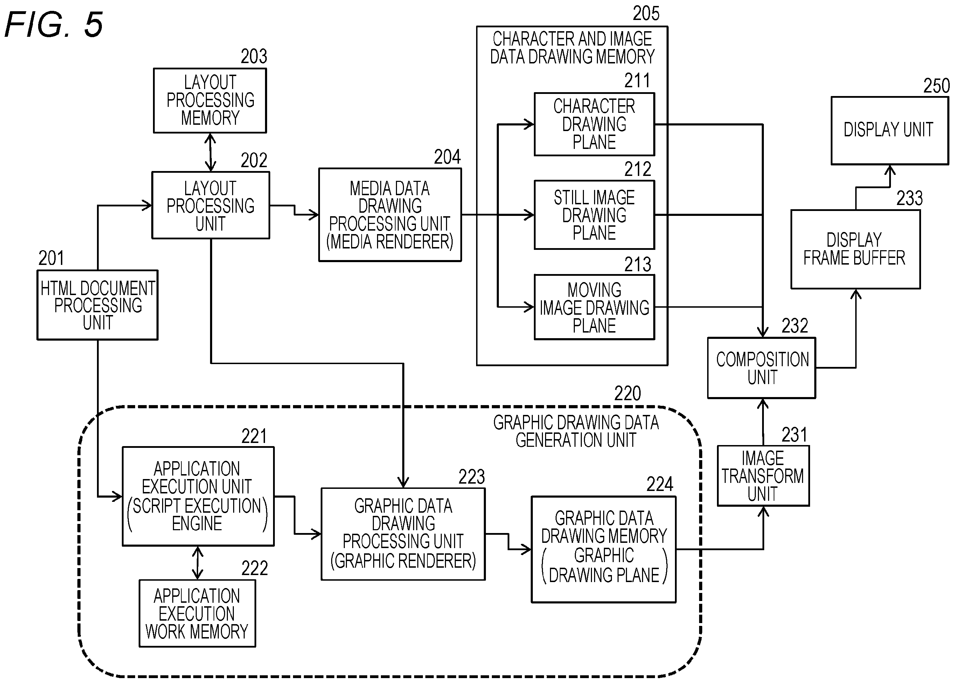

An exemplary specific configuration and specific processing sequence of the reception device 30 that performs the processing described with reference to Fig. 4, will be described with reference to Fig. 5.

Fig. 5 is a block diagram illustrating a partial configuration of the reception device 30.

Fig. 5 illustrates the configuration in which, on the basis of the HTML document file received from the transmission device 20, the reception device 30 generates the composite image including the program content and the graphic data, to display the composite image onto the display unit.

An HTML document processing unit 201 interprets the HTML document file received from the transmission device 20.

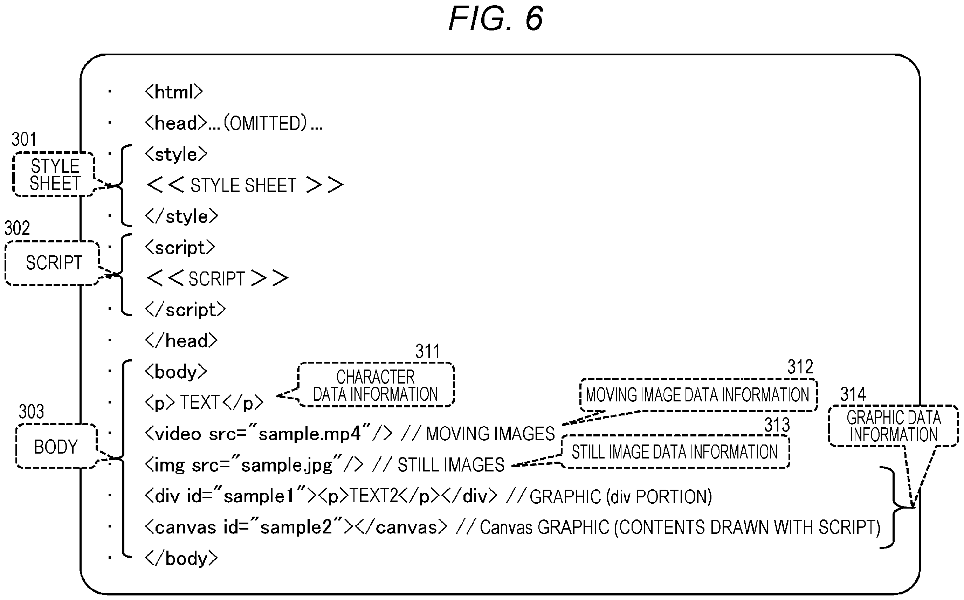

Fig. 6 illustrates an exemplary HTML document.

As illustrated in Fig. 6, for example, the HTML document includes the respective constituent elements of (a) a style sheet 301, (b) a script 302, and (c) a body 303.

The style sheet 301 is data prescribing the arrangement and design of each constituent element to be displayed on a browser screen (e.g., text, still images, moving images, and graphic data).

For example, the style sheet 301 is a style sheet including cascading style sheet (CSS) language.

Applying the style sheet including the CSS allows, for example, an animation including motion added to display information, namely, a CSS animation to be displayed.

For example, the script 302 is a program for generating the graphic data as previously described with reference to Figs. 2 and 3.

Note that, the script 302 is the program executable on the browser and specifically includes a Java (registered trademark) script and the like.

There are various types of scripts for performing various types of processing, such as generation and output processing of two-dimensional image data or three-dimensional image data, and generation and output processing of animation graphic data and the like, in addition to the generation of the graphic data.

In addition, for example, two-dimensional graphic data or three-dimensional graphic data generated by the execution of the script and the style sheet including the CSS described above, are combined, so that an animation (the CSS animation) including motion added to each piece of graphic data can be displayed.

For example, the body 303 is a region in which data including text, moving images, and still images to be generated in accordance with the HTML document and to be output onto the browser screen, and data for graphic data generation are recorded.

As illustrated in the figure, for example, character data information 311, moving image data information 312, still image data information 313, and graphic data information 314 are recorded.

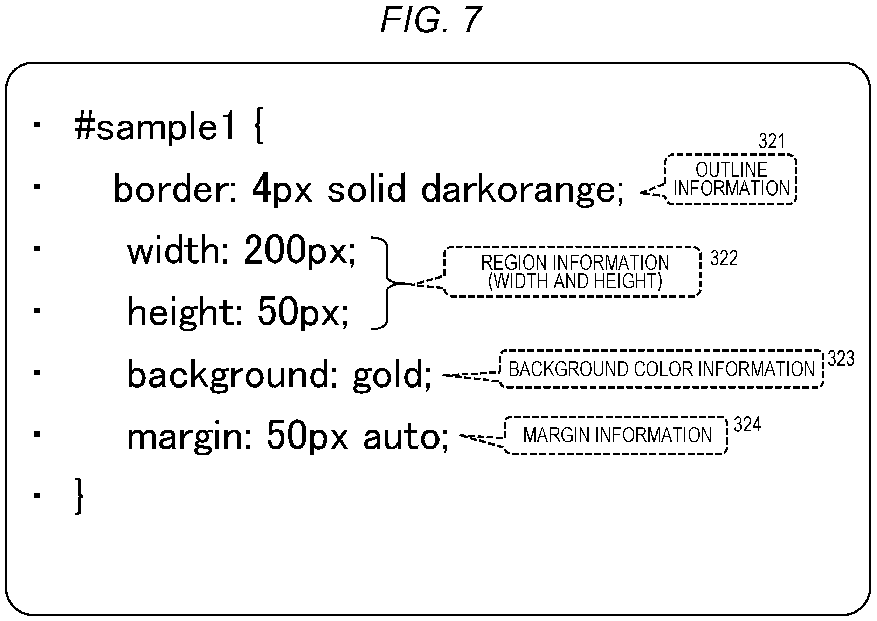

A specific example of the style sheet 301 will be described with reference to Fig. 7.

As described above, the style sheet 301 is the data prescribing the arrangement and design of each constituent element to be displayed on the browser screen (e.g., the text, the still images, the moving images, and the graphic data).

Fig. 7 illustrates a partial configuration of the style sheet.

As illustrated in Fig. 7, for example, the style sheet includes information such as outline information 321, region information 322, background color information 323, and margin information 324.

The example illustrated in Fig. 7 includes information prescribing a partial rectangular region of the browser screen. For example, the information corresponds to prescribed information regarding a display region of text.

The outline information 321 prescribes a solid line having a width of 4 pixels in dark orange.

The region information 322 prescribes a rectangular region having a width of 200 pixels and a height of 50 pixels.

The background color information 323 prescribes gold.

The margin information 324 prescribes a margin of 50 pixels.

For example, the text is displayed with the margin of 50 pixels in the rectangular region having the width of 200 pixels and the height of 50 pixels surrounded with the solid line in the dark orange with the background color of the gold set, prescribed with the pieces of information.

The text includes text recorded in the body 303 of the HTML document illustrated in Fig. 6.

The example illustrated in Fig. 7 is an example of the style sheet 301, and thus data prescribing the display styles of different various types of data to be displayed onto the browser screen, is recorded in the style sheet 301.

In addition, there are various style sheets, such as the CSS style sheet for achieving the animation display described above.

Next, a specific example of the script 302 described with reference to Fig. 6, will be described.

For example, the script 302 is the program for generating the graphic data as previously described with reference to Figs. 2 and 3.

As described above, the script 302 is the program executable on the browser, and specifically includes the Java (registered trademark) script and the like.

In addition, there are scripts for performing various types of processing, such as generation and output processing of three-dimensional image data and generation and output processing of animation graphic data, in addition to the generation of the graphic data.

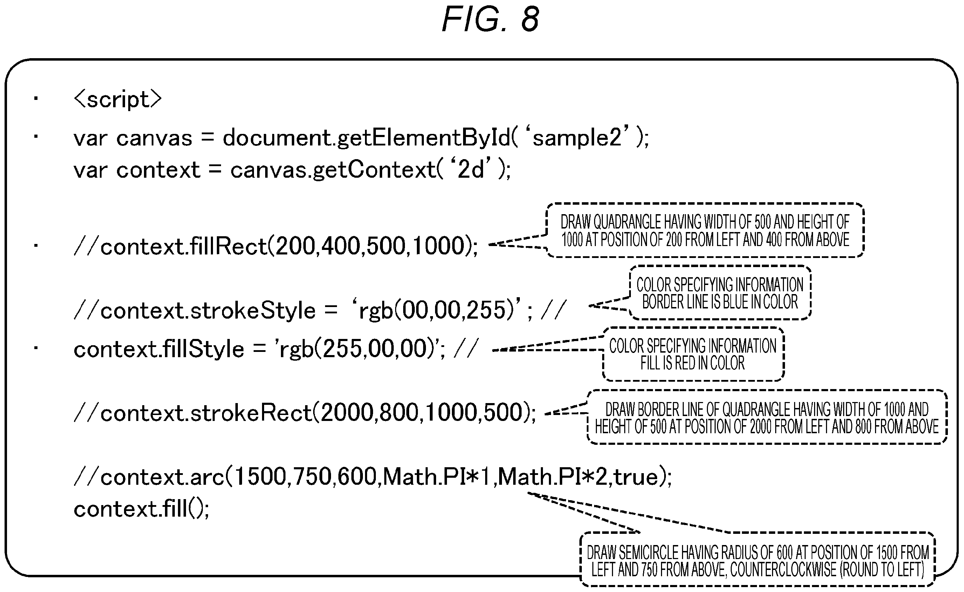

Fig. 8 illustrates an exemplary script.

The example illustrated in Fig. 8 is the exemplary script for performing generation processing of two-dimensional (2D) graphic data.

For example, the script for performing the generation processing of the two-dimensional (2D) graphic data, illustrated in Fig. 8, includes the following drawing orders.
(a)context.fillRect(200,400,500,1000)
(b)context.strokeStyle=rgb(00,00,255)
(c)context.fillStyle=rgb(255,00,00)
(d)context.strokeRect(2000,800,1000,500)
(e)context.arc(1500,750,600,Math.PI*1,Math.PI*2,true)

### (a)context.fillRect(200,400,500,1000)

The description is a drawing order for a quadrangle, and gives an instruction for drawing the quadrangle having a width of 500 pixels and a height of 1000 pixels at a position of 200 pixels from left and 400 pixels from above as the origin.

### (b)context.strokeStyle=rgb(00,00,255)

The description is data that specifies the color (RGB) of the border of the quadrangle specified with (a) above, and gives an instruction for B = 255, namely, drawing a blue quadrangular border line.

### (c)context.fillStyle=rgb(255,00,00)

The description is data that specifies a fill color (RGB) inside the quadrangle specified with (a) above, and gives an instruction for R = 255, namely, filling the inside of the quadrangle in red.

### (d)context.strokeRect(2000,800,1000,500)

The description is a drawing order for the border line of a quadrangle, and gives an instruction for drawing the border line of the quadrangle having a width of 1000 pixels and a height of 500 pixels at a position of 2000 pixels from left and 800 pixels from above as the origin.

### (e)context.arc(1500,750,600,Math.PI*1,Math.PI*2,tru e)

The description is a drawing order for a semicircle, and gives an instruction for counterclockwise drawing the semicircle having a radius of 600 pixels at a position of 1500 pixels from left and 750 pixels from above as the origin.

For example, the various graphic data drawing processing orders are described in the script 302 in this manner.

The application (script) execution unit of the reception device interprets the descriptions in the script to perform the drawing and display processing of the graphic data.

The exemplary script illustrated in Fig. 8, causes the drawing processing of the two-dimensional (2D) graphic data to be performed.

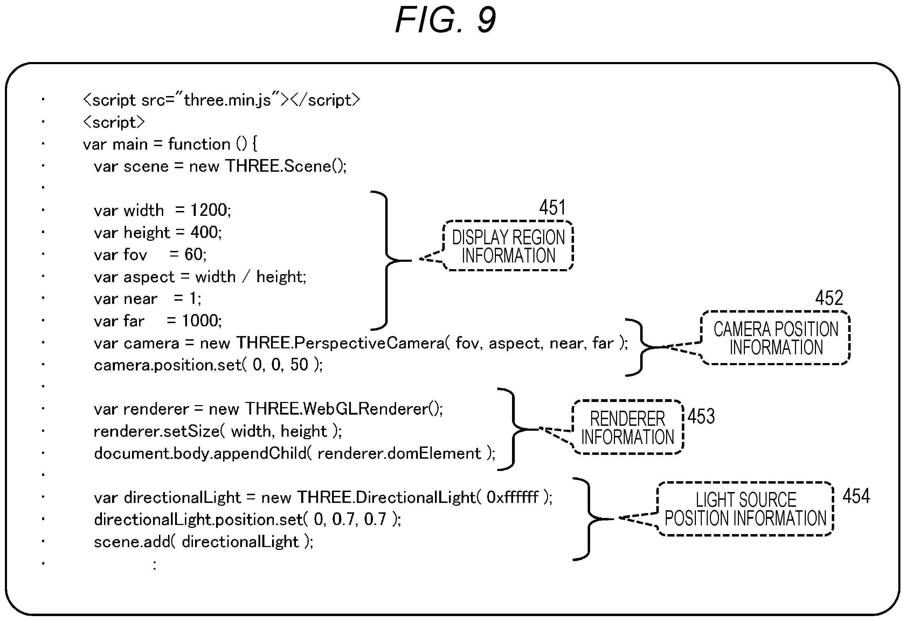

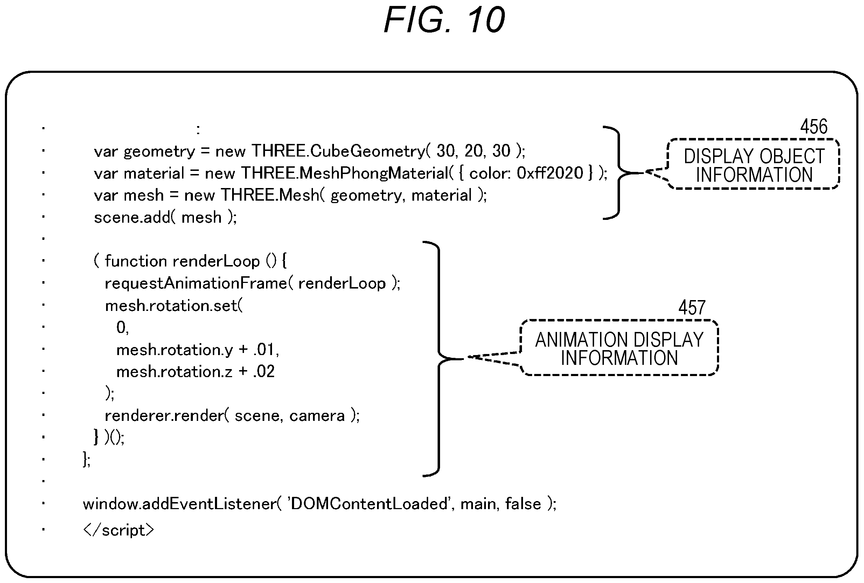

Figs. 9 and 10 illustrate an exemplary script that causes drawing processing of three-dimensional (3D) graphic data to be performed.

As illustrated in Figs. 9 and 10, for example, the script that causes the drawing processing of the three-dimensional (3D) graphic data to be performed, includes the following descriptions.
(a) display region information 451
(b) camera position information 452
(c) renderer information 453
(d) light source position information 454
(e) display object information 454
(f) animation display information 457

The application (script) execution unit of the reception device interprets the descriptions in the script to perform the drawing and animation display processing of the 3D graphic data.

Referring back to Fig. 5, the configuration and processing of the reception device 30 will be described.

The HTML document processing unit 201 performs analysis processing of the HTML document having the configuration described with reference to Fig. 6.

A layout processing unit 202 determines a layout including the arrangement of each calibration element in the browser screen, in accordance with the style sheet included in the HTML document.

A layout processing memory 203 is used in the layout processing.

For example, a media data drawing processing unit (a media renderer) 204 performs drawing processing of the program content including the high-resolution (e.g., 4K or 8K) image data, transmitted from the transmission device 20, such as the broadcast station, to the respective regions including the arrangements determined by the layout processing unit 202.

For example, the drawing processing is individually performed to characters, still images, and moving images included in a broadcast program.

Drawing results are individually recorded in the character and image data drawing memory 205.

The drawing result of the character data is stored as a character drawing plane 211 into the character and image data drawing memory 205.

The drawing result of the still image data is stored as a still image drawing plane 212 into the character and image data drawing memory 205.

The drawing result of the moving image data is stored as a moving image drawing plane 213 into the character and image data drawing memory 205.

All the results are included in the high-resolution (e.g., 4K or 8K) data transmitted from the transmission device 20, such as the broadcast station.

That is, the respective pieces of data including the high-resolution (e.g., 4K or 8K) characters, still images, and moving images, are stored in the character and image data drawing memory 205.

Meanwhile, script data and each piece of data necessary for executing the script, in the HTML document analyzed by the HTML document processing unit 201 are input into an application execution unit (a script execution engine) 221 in a graphic drawing data generation unit 220 illustrated in Fig. 5.

The application execution unit (the script execution engine) 221 executes the script, on the basis of the input data. Processing of executing the script is performed with an application execution work memory 222 as a work area.

For example, the script is the program for outputting the graphic data illustrated in the graphic data drawing memory 103 in Fig. 4.

As described above, the script includes the program for generating various types of data, such as still images, moving images, audio, 2D data, and 3D data.

The application execution unit (the script execution engine) 221 outputs a request for drawing the graphic data, based on the script recorded in the HTML document, to a graphic data drawing processing unit (a graphic renderer) 223.

The graphic data drawing processing unit (the graphic renderer) 223 records the graphic data into a graphic data drawing memory 224, in accordance with the processing request from the application execution unit (the script execution engine) 221. That is, a graphic drawing plane is generated into the graphic data drawing memory 224.

In the processing configuration according to the present disclosure, the graphic drawing processing unit (the graphic renderer) 223 generates the graphic drawing plane having resolution reduced without generating a high-resolution graphic drawing plane based on the script recorded in the HTML document.

That is, the graphic drawing data generation unit 220 performs generation processing of the graphic drawing plane having the resolution reduced, for example, a graphic drawing plane having 2K-image-equivalent resolution, without generating a 4K or 8K high-resolution graphic drawing plane based the script recorded in the HTML document.

In this manner, the graphic drawing plane generated in the graphic data drawing memory 224 includes low-resolution graphic data (graphic drawing plane) lower than the original resolution in the script recorded in the HTML document, instead of the original-resolution graphic data in the script recorded in the HTML document.

Note that, the graphic drawing plane is drawn in the regions including the arrangements determined by the layout processing unit 202, in the graphic data drawing memory 224.

Applying the low-resolution data to the graphic data generated in accordance with the script as described above, enables the load of the drawing processing of the graphic data based on the script, to be reduced. In addition, the necessary capacity of the graphic data drawing memory 224 being a storage region for the graphic data that has been generated, can be made small.

For example, in a case where the description of the script in the HTML document includes a drawing order for 4K-image-equivalent graphic data and the graphic drawing processing unit (the graphic renderer) 223 records 2K-image-equivalent graphic data into the graphic data drawing memory 224, the 2K-image-equivalent graphic data becomes a quarter of the 4K-image-equivalent graphic data, in size. That is, the data size reduced by half, longitudinally and laterally, is provided.

In addition, for example, in a case where the description of the script in the HTML document includes a drawing order for 8K-image-equivalent graphic data and the graphic drawing processing unit (the graphic renderer) 223 records 2K-image-equivalent graphic data into the graphic data drawing memory 224, the 2K-image-equivalent graphic data becomes one eighth of the 8K-image-equivalent graphic data, in size. That is, the data size reduced by one quarter, longitudinally and laterally, is provided.

Note that the script recorded in the HTML document is a script for high-resolution graphic data drawing processing, and coordinates specifying a drawing region of the graphic data are expressed by, for example, a 4K or 8K high-resolution-compliant coordinate system.

Examples of coordinate data to be recorded in the script, include coordinate data based on "canvas" being the specification of a script for drawing two-dimensional (2D) graphic data on the browser, and coordinate data based on "WebGL" being the specification of a script for drawing three-dimensional (3D) graphic data on the browser.

In order to generate, for example, 2K low-resolution graphic data (a graphic drawing plane), there is a need to perform processing of transforming high-resolution-compliant coordinate specifying information described in the script in the HTML document into low-resolution-compliant coordinate specifying information to draw the graphic data.

Either the application execution unit 221 or the graphic data drawing processing unit 223 in the graphic drawing data generation unit 220 illustrated in Fig. 5, performs the transform processing in the coordinate system.

For example, in a case where the application execution unit 221 illustrated in Fig. 5 performs the coordinate transform processing, the application execution unit 221 transforms the high-resolution-compliant coordinate specifying data described in the script in the HTML document into the low-resolution-compliant coordinate specifying data, to output a drawing order based on the description of the script after the transform, to the graphic data drawing processing unit 223.

The graphic data drawing processing unit 223 performs drawing processing of the graphic data in accordance with the drawing order based on the low-resolution-compliant coordinate system, input from the application execution unit 221. With the processing, the low-resolution graphic data (the graphic drawing plane) is recorded in the graphic data drawing memory 224.

In addition, in a case where the graphic data drawing processing unit 223 performs the coordinate transform, the application execution unit 221 illustrated in Fig. 5 outputs a drawing order with the high-resolution-compliant coordinate specifying data remaining intact described in the script in the HTML document, to the graphic data drawing processing unit 223.

The graphic data drawing processing unit 223 transforms the high-resolution-compliant coordinate system in the drawing order input from the application execution unit 221, into the low-resolution-compliant coordinate system, to perform drawing processing of the graphic data in accordance with the drawing order based on the low-resolution-compliant coordinate system after the transform. With the processing, the low-resolution graphic data (the graphic drawing plane) is recorded in the graphic data drawing memory 224.

In this manner, either the application execution unit 221 or the graphic data drawing processing unit 223 can perform the processing for the transform to the low-resolution-compliant coordinate system in the description of the script in the HTML document.

The low-resolution graphic drawing plane recorded in the graphic data drawing memory 224, is input into an image transform unit 231.

The image transform unit 231 performs image expansion processing of expanding the low-resolution graphic drawing plane recorded in the graphic data drawing memory 224, to graphic data in size equivalent to the original high-resolution graphic data based on the script recorded in the HTML document.

For example, in a case where the low-resolution graphic drawing plane recorded in the graphic data drawing memory 224 includes 2K-image-equivalent image data and the high-resolution graphic data based on the script recorded in the HTML document is 4K-image-equivalent graphic data, the image transform unit 231 performs image expansion processing of doubling the longitudinal size and lateral size of the low-resolution graphic drawing plane recorded in the graphic data drawing memory 224.

With the expansion processing, the low-resolution (2K) graphic drawing plane recorded in the graphic data drawing memory 224 can be expanded to graphic data in size equivalent to the original high-resolution (4K) graphic data based on the script recorded in the HTML document.

In addition, for example, in a case where the low-resolution graphic drawing plane recorded in the graphic data drawing memory 224 includes a 2K-image-equivalent image data and the high-resolution graphic data based on the script recorded in the HTML document is an 8K-image-equivalent graphic data, the image transform unit 231 performs image expansion processing of quadrupling the longitudinal size and lateral size of the low-resolution graphic drawing plane recorded in the graphic data drawing memory 224.

With the expansion processing, the low-resolution (2K) graphic drawing plane recorded in the graphic data drawing memory 224 can be expanded to graphic data in size equivalent to the original high-resolution (8K) graphic data based on the script recorded in the HTML document.

With the image expansion processing performed by the image transform unit 231, the graphic drawing plane includes graphic data in size the same as the original-resolution graphic data generated in accordance with the script in the HTML document.

A composition unit 232 performs composition processing between the respective drawing planes each including display-unit output data, corresponding to the characters, the still images, and the moving images stored in the character and image data drawing memory 205, namely, the character drawing plane 211, the still image drawing plane 212, and the moving image drawing plane 213, and the graphic drawing plane to which the image transform unit 231 has performed the expansion processing.

The character drawing plane 211, the still image drawing plane 212, and the moving image drawing plane 213 stored in the character and image data drawing memory 205 are generated in accordance with the description of the HTML document. The drawing planes are each high-resolution and include, for example, 4K or 8K high-resolution data.

Meanwhile, the graphic drawing plane input from the image transform unit 231 is low-resolution and includes expanded data of a 2K-image-equivalent resolution graphic drawing plane, for example. The resolution remains low, but the image size is the same as that of the original-resolution graphic drawing plane acquired by the execution of the script recorded in the HTML document.

The composition unit 232 performs the composition processing between the high-resolution character drawing plane 211, still image drawing plane 212, and moving image drawing plane 213 corresponding to the characters, the still images, and the moving images stored in the character and image data drawing memory 205, respectively, and the low-resolution graphic drawing plane to which the image transform unit 231 has performed the expansion processing.

Note that, the composition unit 232 performs composition processing of a plurality of different drawing planes generated in accordance with the layout determined by the layout processing unit 202.

As described above, the layout processing unit 202 determines the layout based on the style sheet described in the hyper text markup language (HTML). The composition unit 232 performs the composition processing of the plurality of different drawing planes generated in accordance with the layout determined by the layout processing unit 202.

A composite result of the plurality of drawing planes generated by the composition unit 232 is stored in a display frame buffer 233, and then the composite result is output to a display unit 250.

For example, a displayed image of the display unit 250 corresponds to the output image 50 illustrated in Fig. 4.

The graphic data acquired by the execution of the script recorded in the HTML document, includes two rectangular images and one semicircular image.

The graphic data is acquired by expanding the drawing data (the graphic drawing plane) generated with the resolution reduced, by a size equivalent to the original resolution based on the script in the HTML document, during the drawing processing.

The other output data includes the original high-resolution image acquired in accordance with the HTML document.

In this manner, the drawing processing of generating the graphic data acquired by the execution of the script recorded in the HTML document, as the graphic drawing plane with the resolution reduced, is performed in the image generation and output processing in the reception device 30 according to the present disclosure.

After that, with the performance of the expansion processing of the low-resolution graphic drawing plane, a graphic drawing plane in size the same as the original-resolution graphic drawing plane based on the script recorded in the HTML document, is generated to be superimposed and displayed onto, for example, the other high-resolution image and character drawing planes.

With the processing, the load of the generation processing of the graphic drawing data (the graphic drawing plane) can be reduced, and additionally the capacity of the memory that stores the graphic drawing data (the graphic drawing plane) can be made small.

Therefore, even in a device, such as a television, having data throughput low and data recording memory capacity small, output of the composite image including the graphic data generated by the execution of the script, can be certainly performed without delay.

Note that, according to the embodiment described above, the examples in which the high-resolution graphic data is defined as the 4K or 8K-image-equivalent graphic data and the low-resolution graphic data is defined as the 2K-image-equivalent graphic data, have been described, but are exemplary.

The generation and drawing processing of the graphic data, accompanied with the reduction of the resolution, in the generation of the graphic data in the graphic drawing data generation unit illustrated in Fig. 5, is processing of generating and drawing graphic data having resolution lower than the resolution based on the description of the script in the HTML document, and various types of resolution can be combined.

In a case where the script recorded in the HTML document is a script for generating 8K-image-equivalent graphic data, according to one mode of the generation processing of the graphic data accompanied with the resolution reduced in the graphic drawing data generation unit illustrated in Fig. 5, for example, not only generation processing of 2K-image-equivalent graphic data but also generation processing of 4K-image-equivalent graphic data is included.

In this manner, the processing according to the present disclosure includes performing generation of graphic data having various types of resolution lower than the graphic data having the original resolution based on the description of the script in the HTML document.

### [5. Sequence of Processing Performed by Information Processing Device (Reception Device) According to Present Disclosure]

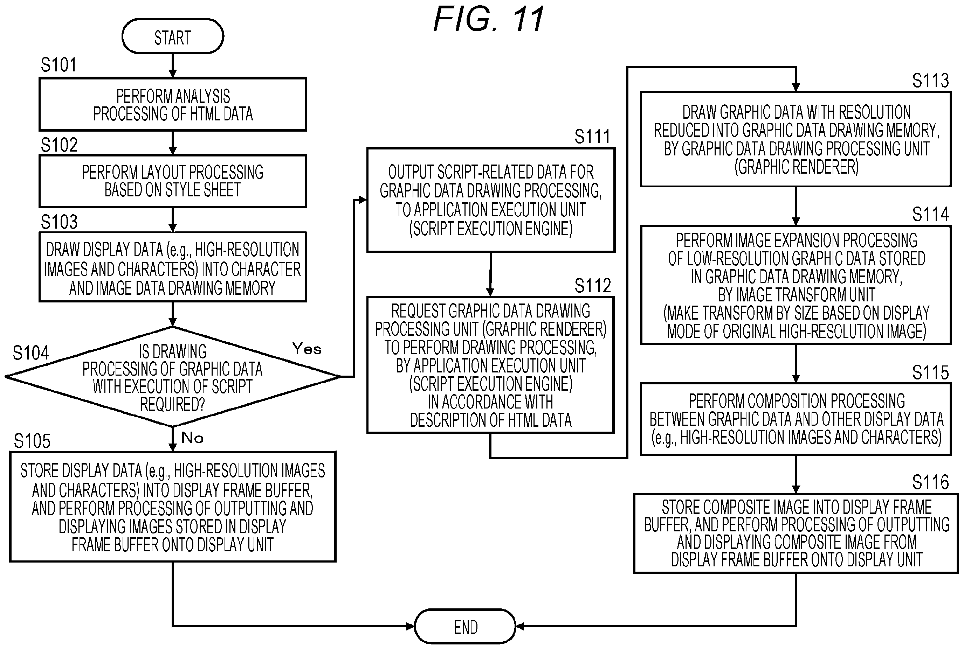

Next, a sequence of processing performed by the information processing device (the reception device) according to the present disclosure, will be described with reference to flowcharts illustrated in Fig. 11 and subsequent drawings.

The flowchart illustrated in Fig. 11, is for describing a sequence indicating exemplary processing performed by the information processing device (the reception device 30) according to the present disclosure.

The reception device 30 stores a program including a procedure of the processing based on the processing sequence illustrated in Fig. 11, recorded, into a storage unit, and a data processing unit including a CPU and the like having a program execution function, executes the program to perform the processing based on the flow illustrated in Fig. 11.

Note that, the data processing unit has a function of performing the processing of each constituent unit previously described, for example, with reference to Fig. 5.

The processing at each step in the flowchart illustrated in Fig. 11 will be sequentially described below.

### (Step S101)

At step S101, the data processing unit of the reception device first performs the analysis processing of the HTML document.

The processing corresponds to the processing performed by the HTML document processing unit 201 illustrated in Fig. 5.

The HTML document is, for example, received from the transmission device 20, such as the broadcast station.

For example, the HTML document includes the respective constituent elements of (a) the style sheet 301, (b) the script 302, and (c) the body 303, as previously described with reference to Fig. 6.

### (Step S102)

Next, at step S102, the data processing unit of the reception device determines the style of display data to be displayed on the display unit of the reception device, namely, the display mode (style) of each constituent element, such as a display position, in accordance with the style sheet described in the HTML document.

The processing is performed by the layout processing unit 202 described with reference to Fig. 5.

As previously described with reference to Fig. 7, the style sheet includes information regarding the display mode and the display position regarding each constituent element of the display data (characters, still images, and moving images), recorded. The layout processing unit 202 determines the display mode and the display position regarding each constituent element of the display data, in accordance with the description of the style sheet.

### (Step S103)

Next, at step S103, the data processing unit of the reception device generates data for display including the images and the characters being the constituent elements in the display data to be displayed onto the display unit of the reception device, in accordance with the description of the HTML document.

The processing is performed by the media data drawing processing unit (the media renderer) 204 described with reference to Fig. 5.

For example, the media data drawing processing unit (the media renderer) 204 performs the drawing processing of the program content including the high-resolution (e.g., 4K or 8K) image data, transmitted from the transmission device 20, such as the broadcast station, to the respective regions including the arrangements determined by the layout processing unit 202.

For example, the drawing processing is individually performed to the characters, the still images, and the moving images included in the broadcast program.

The drawing results are individually recorded in the character and image data drawing memory 205 illustrated in Fig. 5. As illustrated in Fig. 5, the drawing result of the character data is stored as the character drawing plane 211 in the character and image data drawing memory 205.

The drawing result of the still image data is stored as the still image drawing plane 212 into the character and image data drawing memory 205.

The drawing result of the moving image data is stored as the moving image drawing plane 213 into the character and image data drawing memory 205.

All the results are included in the high-resolution (e.g., 4K or 8K) data transmitted from the transmission device 20, such as the broadcast station.

That is, the respective pieces of data including the high-resolution (e.g., 4K or 8K) characters, still images, and moving images, are stored in the character and image data drawing memory 205.

### (Step S104)

Next, at step S104, the data processing unit of the reception device determines whether the drawing processing of the graphic data with the execution of the script is required.

It is determined whether the HTML document analyzed at step S101 includes the script for performing the drawing processing of the graphic data (a program to be executed on the browser).

In a case where it is determined that the drawing processing of the graphic data with the execution of the script is required, the processing proceeds to step S111.

Meanwhile, in a case where it is determined that the drawing processing of the graphic data with the execution of the script is not required, the processing proceeds to step S105.

### (Step S105)

At step S104, in the case where it is determined that the drawing processing of the graphic data with the execution of the script is not required, the processing proceeds to step S105.

At step S105, the data processing unit of the reception device stores the display data (e.g., the high-resolution images and characters) into the display frame buffer, and performs the processing of outputting and displaying the images stored in the display frame buffer onto the display unit.

Specifically, the drawing planes drawn in the character and image data drawing memory 205 illustrated in Fig. 5 at step S103 previously described, namely, the character drawing plane 211, the still image drawing plane 212, and the moving image drawing plane 213 are stored into the display frame buffer 233 illustrated in Fig. 5, and then the processing of outputting and displaying the images stored in the display frame buffer 233 onto the display unit 250 is performed.

During the processing, the display processing of the graphic data is not performed, and the data for display including only the high-resolution (e.g., 4K or 8K) data transmitted from the transmission device 20, such as the broadcast station, is generated and displayed.

### (Step S111)

Meanwhile, in the case where it is determined at step S104 that the drawing processing of the graphic data with the execution of the script is required, the processing proceeds to step S111.

At step S111, the data processing unit of the reception device outputs script-related data for the graphic data drawing processing, to the application execution unit (the script execution engine) 221 illustrated in Fig. 5.

That is, the script data and each piece of data necessary for executing the script, in the HTML document analyzed by the HTML document processing unit 201 are input into the application execution unit (the script execution engine) 221 illustrated in Fig. 5.

### (Step S112)

Next, at step S112, the application execution unit (the script execution engine) 221 performs the script on the basis of the input data. The script is performed with the application execution work memory 222 as the work area.

For example, the script is the program for outputting the graphic data illustrated in the graphic data drawing memory 103 in Fig. 4.

The application execution unit (the script execution engine) 221 outputs the request for drawing the graphic data, based on the script recorded in the HTML document, to the graphic data drawing processing unit (the graphic renderer) 223.

### (Step S113)

At step S113, the graphic data drawing processing unit (the graphic renderer) 223 illustrated in Fig. 5, records the graphic data into the graphic data drawing memory 224, in accordance with the processing request from the application execution unit (the script execution engine) 221. That is, the graphic drawing plane is generated in the graphic data drawing memory 224.

Note that, as previously described, the graphic drawing processing unit (the graphic renderer) 223 generates the graphic drawing plane having the resolution reduced without generating the high-resolution graphic drawing plane based on the script recorded in the HTML document.

That is, for example, the generation processing of the 2K-image-equivalent graphic drawing plane with the resolution reduced, is performed without generating the 4K or 8K high-resolution graphic drawing plane based on the script recorded in the HTML document.

The graphic drawing plane generated in the graphic data drawing memory 224 includes the low-resolution graphic data (graphic drawing plane) lower than the original resolution in the script recorded in the HTML document, instead of the original-resolution graphic data in the script recorded in the HTML document.

Note that, as described above, the script recorded in the HTML document is the script for high-resolution graphic data drawing processing, and the coordinates specifying a drawing region of the graphic data are expressed by, for example, the 4K or 8K high-resolution-compliant coordinate system.

In order to generate, for example, the 2K low-resolution graphic data (the graphic drawing plane), there is the need to perform the processing of transforming the high-resolution-compliant coordinate specifying information described in the script in the HTML document into the low-resolution-compliant coordinate specifying information to perform the drawing processing of the graphic data.

As previously described, either the application execution unit 221 or the graphic data drawing processing unit 223 illustrated in Fig. 5, performs the transform processing in the coordinate system.

For example, either the application execution unit 221 or the graphic data drawing processing unit 223 illustrated in Fig. 5, performs the processing of transforming high-resolution-data-compliant coordinate data recorded in the script for high-resolution graphic data drawing processing recorded in the HTML document, into low-resolution-data-compliant coordinate data.

The drawing processing is performed in accordance with the coordinate data after the transform, so that the low-resolution graphic data (the graphic drawing plane) is recorded into the graphic data drawing memory 224.

### (Step S114)

The next processing at step S114 is the processing in the image transform unit 231 illustrated in Fig. 5.

At step S114, the image transform unit 231 performs the image expansion processing of the low-resolution graphic data stored in the graphic data drawing memory 224.

That is, the processing of transforming the low-resolution graphic data stored in the graphic data drawing memory 224 by the size based on the display mode of the original high-resolution image generated in accordance with the script described in the HTML document, is performed.

For example, in the case where the low-resolution graphic drawing plane recorded in the graphic data drawing memory 224 includes the 2K-image-equivalent image data and the high-resolution graphic data based on the script recorded in the HTML document is the 4K-image-equivalent graphic data, the image transform unit 231 performs the image expansion processing of doubling the longitudinal size and lateral size of the low-resolution graphic drawing plane recorded in the graphic data drawing memory 224.

With the image expansion processing performed by the image transform unit 231, the graphic drawing plane includes the graphic data in size the same as the original-resolution graphic data generated in accordance with the script in the HTML document.

### (Step S115)

The next processing at step S115 is performed by the composition unit 232 illustrated in Fig. 5.

The composition unit 232 performs the composition processing between the respective drawing planes each including the display-unit output data, corresponding to the characters, the still images, and the moving images stored in the character and image data drawing memory 205, namely, the character drawing plane 211, the still image drawing plane 212, and the moving image drawing plane 213, and the graphic drawing plane to which the image transform unit 231 has performed the expansion processing.

The character drawing plane 211, the still image drawing plane 212, and the moving image drawing plane 213 stored in the character and image data drawing memory 205 are generated in accordance with the description of the HTML document. The drawing planes are each high-resolution and include, for example, the 4K or 8K high-resolution data.

Meanwhile, the graphic drawing plane input from the image transform unit 231 is low-resolution and includes the expanded data of the 2K-image-equivalent resolution graphic drawing plane, for example. The resolution remains low, but the image size is the same as that of the original-resolution graphic drawing plane acquired with the execution of the script recorded in the HTML document.

The composition unit 232 performs the composition processing between the high-resolution character drawing plane 211, still image drawing plane 212, and moving image drawing plane 213 corresponding to the characters, the still images, and the moving images stored in the character and image data drawing memory 205, respectively, and the low-resolution graphic drawing plane to which the image transform unit 231 has performed the expansion processing.

### (Step S116)

At step S116, the composite image generated by the composition unit 232 as a result of the composition processing at step S115, is stored in the display frame buffer 233 illustrated in Fig. 5, and then the composite image is output to the display unit 250.

As previously described, for example, the displayed image of the display unit 250 corresponds to the output image 50 illustrated in Fig. 4.

The graphic data acquired by the execution of the script recorded in the HTML document, includes the two rectangular images and the one semicircular image.

The graphic data is acquired by expanding the drawing data (the graphic drawing plane) generated with the resolution reduced, by the size equivalent to the original resolution based on the script in the HTML document, during the drawing processing.

The other output data includes the original high-resolution image acquired in accordance with the HTML document.

The reception device 30 according to the present disclosure performs the processing based on the flowchart illustrated in Fig. 11.

The graphic data acquired by the execution of the script recorded in the HTML document, is generated as the graphic drawing plane with the resolution reduced. After that, the expansion processing of the low-resolution graphic drawing plane is performed to generate the graphic drawing plane in size the same as the original-resolution graphic drawing plane based on the script recorded in the HTML document. Then, the graphic drawing plane is superimposed and displayed onto, for example, the drawing planes including the other high-resolution images and characters.

With the processing, the load of the generation processing of the graphic drawing data (the graphic drawing plane) can be reduced, and additionally the capacity of the memory that stores the graphic drawing data (the graphic drawing plane) can be made small.

Therefore, even in the device, such as the television, having the data throughput low and the data recording memory capacity small, the output of the composite image including the graphic data generated by the execution of the script, can be certainly performed without delay.

Note that, according to the embodiment described above, the examples in which the high-resolution graphic data is defined as the 4K or 8K-image-equivalent graphic data and the low-resolution graphic data is defined as the 2K-image-equivalent graphic data, have been described, but are exemplary.

In the case where the script recorded in the HTML document is the script for generating 8K-image-equivalent graphic data, according to the one mode of the generation processing of the graphic data accompanied with the resolution reduced, for example, not only the generation processing of the 2K-image-equivalent graphic data but also the generation processing of the 4K-image-equivalent graphic data is included.

According to the present disclosure, the processing of generating the graphic data having the various types of resolution lower than the graphic data having the original resolution based on the description of the script in the HTML document, is included.

### [6. Embodiment Including Performance of Necessity Determination of Resolution Reduction Processing and Performance of Processing based on Determined Result, in Drawing Processing of Graphic Data]

According to the embodiment described above, the description in which the reception device 30 constantly performs the resolution reduction processing to draw the low-resolution graphic data, in the drawing processing of the graphic data, has been given.

The next is regarding an embodiment including performance of necessity determination of the resolution reduction processing and performance of processing based on a determined result, in the drawing processing of the graphic data.

In a situation where the resource of the reception device 30 is sufficient, for example, in a case where an available resource for the drawing processing of the graphic data is sufficient and additionally the free capacity of the graphic data drawing memory is sufficient, drawing the high-resolution graphic data without the reduction of the resolution in the drawing processing of the graphic data, allows the high-resolution graphic data to be displayed, so that a higher-resolution image can be output.

For example, in a case where the graphic data drawn in accordance with the script described in the HTML document is small in size, the load of the drawing processing of the graphic data with the execution of the script is small and thus the capacity of the memory that stores the drawing data may be small.

In this case, the script described in the HTML document may be executed without the performance of the resolution reduction processing in the drawing processing of the graphic data, to generate and store the high-resolution graphic drawing plane into the graphic data drawing memory.

In a case where the information processing device (the reception device 30) determines whether to perform the resolution reduction processing in the drawing processing of the graphic data, for example, the following determination processing is performed.

(Determination processing) It is determined whether the available resource (the data throughput and the memory capacity) of the information processing device (the reception device 30) is sufficient for performing the drawing processing of the graphic data with the script described in the HTML document.

In a case where it is determined that the resource is sufficient, as a result of the determination processing, the graphic data drawing processing unit 223 illustrated in Fig. 5 generates and stores the high-resolution graphic drawing plane into the graphic drawing memory 224 illustrated in Fig. 5, without performing the resolution reduction processing in the drawing processing of the graphic data.

In this case, the image transform unit 231 illustrated in Fig. 5 outputs the high-resolution graphic drawing plane remaining intact, stored in the graphic drawing memory 224, to the composition unit 232, without performing the image transform, such as the image expansion.

Meanwhile, in a case where it is determined that the resource is insufficient, as a result of the determination processing, the graphic data drawing processing unit 223 illustrated in Fig. 5 generates and stores the low-resolution graphic drawing plane into the graphic drawing memory 224 illustrated in Fig. 5 with the performance of the resolution reduction processing in the drawing processing of the graphic data.

In this case, the image transform unit 231 illustrated in Fig. 5 performs the image transform, such as the image expansion. That is, the low-resolution graphic drawing plane stored in the graphic drawing memory 224 is expanded by an image size equivalent to the high-resolution graphic data, and the expanded data is output to the composition unit 232.

Note that, the resource situation may gradually vary in response to the data processing situation of the information processing device (the reception device 30).

For example, the information processing device (the reception device 30) performs other data processing other than the drawing processing of the graphic data, in parallel to the drawing processing of the graphic data. When the load of the other data processing is large, an allocatable resource for the drawing processing of the graphic data decreases.

Meanwhile, in a case where the load of the other data processing other than the drawing processing of the graphic data is small, the allocatable resource for the drawing processing of the graphic data increases.

In this manner, there is a possibility that the allocatable resource for the drawing processing of the graphic data gradually varies. In the case where the determination of whether the resolution reduction processing is performed in the drawing processing of the graphic data, is performed, the available resource is preferably checked at the time to perform the determination.

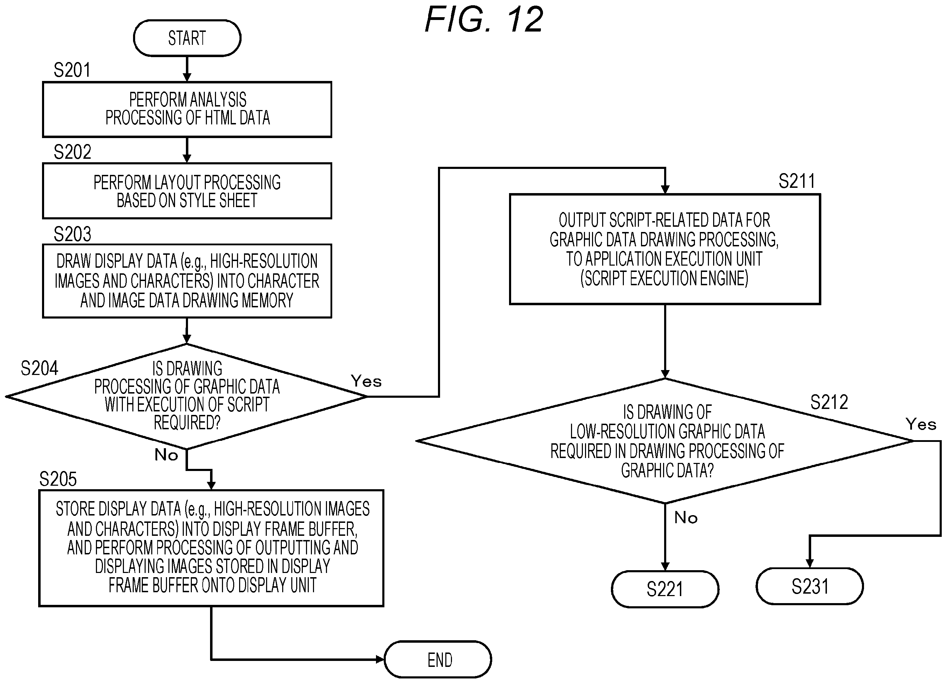

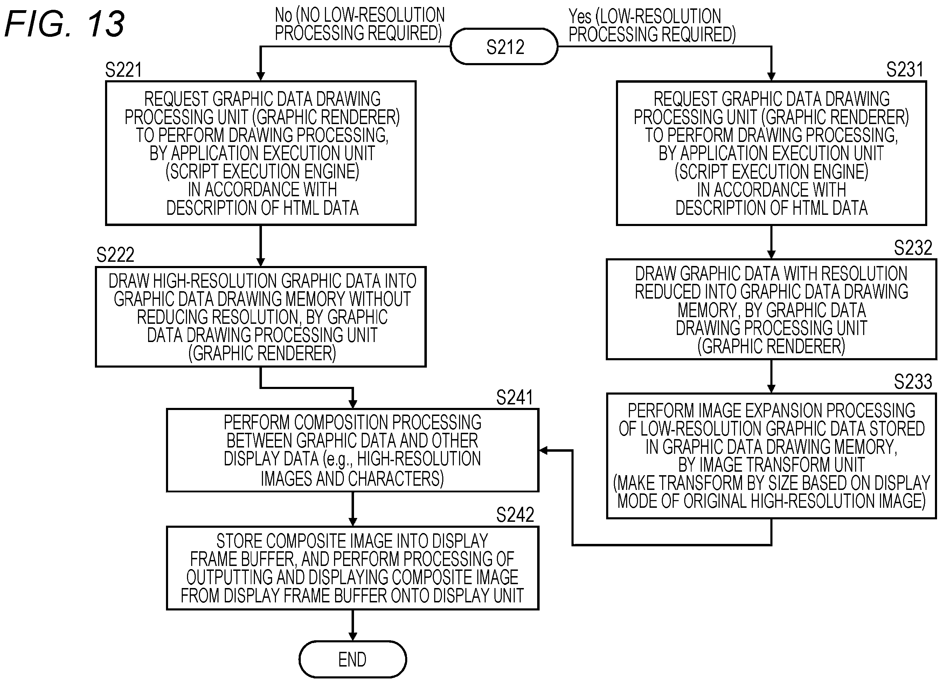

A processing sequence according to the embodiment in which the necessity determination of the resolution reduction processing is performed and then the processing based on the determined result is performed, in the drawing processing of the graphic data, will be described with reference to flowcharts illustrated in Figs. 12 and 13.

The flowcharts illustrated in Figs. 12 and 13 describe a sequence of exemplary processing performed by the information processing device (the reception device 30) according to the present disclosure.

The reception device 30 stores a program including a procedure of the processing based on the processing sequence illustrated in Figs. 12 and 13, recorded, into the storage unit, and the data processing unit including the CPU and the like having the program execution function, executes the program to perform the processing based on the flow illustrated in Figs. 12 and 13.

Note that, the data processing unit has the function of performing the processing of each constituent unit previously described, for example, with reference to Fig. 5.

The processing at each step in the flowcharts illustrated in Figs. 12 and 13 will be sequentially described below.

### (Steps S201 to S204)

The pieces of processing at steps S201 to S204 are the same as the pieces of processing at steps S101 to S104 previously described with reference to the flowchart illustrated in Fig. 11.

The pieces of processing will be collectively described.

At step S201, the data processing unit of the reception device first performs the analysis processing of the HTML document.

The processing corresponds to the processing performed by the HTML document processing unit 201 illustrated in Fig. 5.

Next, at step S202, the data processing unit of the reception device determines the style of the display data to be displayed onto the display unit of the reception device, namely, the display mode (style) of the past constituent element, such as the display position, in accordance with the style sheet described in the HTML document.

The processing is performed by the layout processing unit 202 described with reference to Fig. 5.

Next, at step S203, the data processing unit of the reception device generates the data for display including the images and the characters being the constituent elements in the display data to be displayed onto the display unit of the reception device, in accordance with the description of the HTML document.

The processing is performed by the media data drawing processing unit (the media renderer) 204 described with reference to Fig. 5.

For example, the media data drawing processing unit (the media renderer) 204 performs the drawing processing of the program content including the high-resolution (e.g., 4K or 8K) image data, transmitted from the transmission device 20, such as the broadcast station, to the respective regions including the arrangements determined by the layout processing unit 202.

For example, the drawing processing is individually performed to the characters, the still images, and the moving images included in the broadcast program.

The drawing results are individually recorded in the character and image data drawing memory 205 illustrated in Fig. 5. As illustrated in Fig. 5, the drawing result of the character data is stored as the character drawing plane 211 in the character and image data drawing memory 205.

The drawing result of the still image data is stored as the still image drawing plane 212 into the character and image data drawing memory 205.

The drawing result of the moving image data is stored as the moving image drawing plane 213 into the character and image data drawing memory 205.

Next, at step S204, the data processing unit of the reception device determines whether the drawing processing of the graphic data with the execution of the script is required.

It is determined whether the HTML document analyzed at step S201 includes the script for performing the drawing processing of the graphic data (the program to be executed on the browser).

In a case where it is determined that the drawing processing of the graphic data with the execution of the script is required, the processing proceeds to step S211.

Meanwhile, in a case where it is determined that the drawing processing of the graphic data with the execution of the script is not required, the processing proceeds to step S205.

### (Step S205)

At step S204, in the case where it is determined that the drawing processing of the graphic data with the execution of the script is not required, the processing proceeds to step S205.

At step S205, the data processing unit of the reception device stores the display data (e.g., the high-resolution images and characters) into the display frame buffer, and performs the processing of outputting and displaying the images stored in the display frame buffer onto the display unit.

Specifically, the drawing planes drawn in the character and image data drawing memory 205 illustrated in Fig. 5 at step S203 previously described, namely, the character drawing plane 211, the still image drawing plane 212, and the moving image drawing plane 213 are stored into the display frame buffer 233 illustrated in Fig. 5, and then the processing of outputting and displaying the images stored in the display frame buffer 233 onto the display unit 250 is performed.

During the processing, the display processing of the graphic data is not performed, and the data for display including only the high-resolution (e.g., 4K or 8K) data transmitted from the transmission device 20, such as the broadcast station, is generated and displayed.

### (Step S211)

The processing at step S211 is the same as the processing at step S111 previously described with reference to the flowchart illustrated in Fig. 11.

At step S204, in the case where it is determined that the drawing processing of the graphic data with the execution of the script is required, the processing proceeds to step S211.

At step S211, the data processing unit of the reception device outputs the script-related data for the graphic data drawing processing, to the application execution unit (the script execution engine) 221 illustrated in Fig. 5.

### (Step S212)

At step S212, the data processing unit of the information processing device (the reception device 30) determines whether there is a necessity for drawing the graphic data with the resolution reduced, instead of the graphic data having the resolution based on the description of the script in the HTML document, in the drawing processing of the graphic data.

For example, the determination processing is performed as the following determination processing previously described.

(Determination processing) It is determined whether the available resource (the data throughput and the memory capacity) of the information processing device (the reception device 30) is sufficient for performing the drawing processing of the graphic data with the script described in the HTML document.

For example, specifically, in a case where the size of the graphic data to be drawn with the script described in the HTML document is a prescribed size that has been previously prescribed, or less, it is determined that the load of the drawing processing of the graphic data with the script described in the HTML document is small and a sufficient resource for executing the script is present, so that it can be determined that the resolution reduction processing is not performed.

Meanwhile, in a case where the size of the graphic data to be drawn with the script described in the HTML document is more than the prescribed size that has been previously prescribed, it is determined that the load of the drawing processing of the graphic data with the script described in the HTML document is large and no sufficient resource for performing the script is present, so that processing of determining that the resolution reduction processing is performed, is performed.

Note that, as described above, the available resource (the data throughput and the memory capacity) of the information processing device (the reception device 30) varies in response to the performance situation of the other data processing, and thus the determination is preferably made in consideration of the situation of the other data processing.

For example, in a case where the load of the other data processing is large, the "prescribed size" applied to the determination processing can be set small. In a case where the load of the other data processing is small, the "prescribed size" can be set large.

In this manner, at step S212, the data processing unit of the information processing device (the reception device 30) determines whether there is the necessity for drawing the graphic data with the resolution reduced, instead of the graphic data having the resolution based on the description of the script in the HTML document, in the drawing processing of the graphic data.

In a case where it is determined that there is no necessity for drawing the graphic data with the resolution reduced, the processing proceeds to step S221.

Meanwhile, in a case where it is determined that there is the necessity for drawing the graphic data with the resolution reduced, the processing proceeds to step S231.

### (Step S221)

At step S212, in the case where it is determined that there is no necessity for drawing the graphic data with the resolution reduced, the processing proceeds to step S221.

The application execution unit (the script execution engine) 221 illustrated in Fig. 5 executes the script at step S221. The application execution unit (the script execution engine) 221 executes the script with the application execution work memory 222 as the work area.

The application execution unit (the script execution engine) 221 outputs the request for drawing the graphic data, based on the script recorded in the HTML document, to the graphic data drawing processing unit (the graphic renderer) 223.

Note that, at steps S221 and S222, the drawing processing of the graphic data having the resolution based on the description of the script, is performed without performing the resolution reduction processing.

### (Step S222)

At step S222, the graphic data drawing processing unit (the graphic renderer) 223 illustrated in Fig. 5, records the graphic data into the graphic data drawing memory 224, in accordance with the processing request from the application execution unit (the script execution engine) 221. That is, the graphic drawing plane is generated in the graphic data drawing memory 224.

Note that, as described above, at steps S221 and S222, the drawing processing of the graphic data having the resolution based on the description of the script, is performed without performing the resolution reduction processing.

The high-resolution graphic drawing plane based on the description of the script, is generated in the graphic data drawing memory 224.

### (Step S231)

Next, the processing at steps S231 to S233 being the processing in the case where it is determined at step S212 that there is the necessity for drawing the graphic data with the resolution reduced, will be described.

First, at step S231, the application execution unit (the script execution engine) 221 illustrated in Fig. 5 performs the script. The application execution unit (the script execution engine) 221 executes the script with the application execution work memory 222 as the work area.

The application execution unit (the script execution engine) 221 outputs the request for drawing the graphic data, based on the script recorded in the HTML document, to the graphic data drawing processing unit (the graphic renderer) 223.

Note that, at steps S231 to S233, the drawing processing of the graphic data having the resolution lower than the resolution based on the description of the script, is performed.

As described above, the script recorded in the HTML document is the script for high-resolution graphic data drawing processing, and the coordinates specifying a drawing region of the graphic data are expressed by, for example, the 4K or 8K high-resolution-compliant coordinate system.

In order to generate, for example, the 2K low-resolution graphic data (the graphic drawing plane), there is the need to perform the processing of transforming the high-resolution-compliant coordinate specifying information described in the script in the HTML document into the low-resolution-compliant coordinate specifying information to perform the drawing processing of the graphic data.

As previously described, either the application execution unit 221 or the graphic data drawing processing unit 223 illustrated in Fig. 5, performs the transform processing in the coordinate system.

For example, either the application execution unit 221 or the graphic data drawing processing unit 223 illustrated in Fig. 5, performs the processing of transforming the high-resolution-data-compliant coordinate data recorded in the script for high-resolution graphic data drawing processing recorded in the HTML document, into the low-resolution-data-compliant coordinate data.

The drawing processing is performed in accordance with the coordinate data after the transform, so that the low-resolution graphic data (the graphic drawing plane) is recorded into the graphic data drawing memory 224.

### (Step S232)

At step S232, the graphic data drawing processing unit (the graphic renderer) 223 illustrated in Fig. 5, records the graphic data into the graphic data drawing memory 224, in accordance with the processing request from the application execution unit (the script execution engine) 221. That is, the graphic drawing plane is generated in the graphic data drawing memory 224.

The graphic drawing processing unit (the graphic renderer) 223 generates the graphic drawing plane with the resolution reduced without generating the high-resolution graphic drawing plane based on the script recorded in the HTML document.

That is, for example, the generation processing of the 2K-image-equivalent graphic drawing plane with the resolution reduced, is performed without generating the 4K or 8K high-resolution graphic drawing plane based on the script recorded in the HTML document.

The graphic drawing plane generated in the graphic data drawing memory 224 includes the low-resolution graphic data (graphic drawing plane) lower than the original resolution in the script recorded in the HTML document, instead of the original-resolution graphic data in the script recorded in the HTML document.

Note that, as described above, the script recorded in the HTML document is the script for high-resolution graphic data drawing processing, and the coordinates specifying a drawing region of the graphic data are expressed by, for example, the 4K or 8K high-resolution-compliant coordinate system.

In order to generate, for example, the 2K low-resolution graphic data (the graphic drawing plane), there is the need to perform the processing of transforming the high-resolution-compliant coordinate specifying information described in the script in the HTML document into the low-resolution-compliant coordinate specifying information to perform the drawing processing of the graphic data.

As previously described, either the application execution unit 221 or the graphic data drawing processing unit 223 illustrated in Fig. 5, performs the transform processing in the coordinate system.

For example, either the application execution unit 221 or the graphic data drawing processing unit 223 illustrated in Fig. 5, performs the processing of transforming the high-resolution-data-compliant coordinate data recorded in the script for high-resolution graphic data drawing processing recorded in the HTML document, into the low-resolution-data-compliant coordinate data.

The drawing processing is performed in accordance with the coordinate data after the transform, so that the low-resolution graphic data (the graphic drawing plane) is recorded into the graphic data drawing memory 224.

### (Step S233)

The next processing at step S233 is the processing in the image transform unit 231 illustrated in Fig. 5.

At step S233, the image transform unit 231 performs the image expansion processing of the low-resolution graphic data stored in the graphic data drawing memory 224.

That is, the processing of transforming the low-resolution graphic data stored in the graphic data drawing memory 224 by the size based on the display mode of the original high-resolution image generated in accordance with the script described in the HTML document, is performed.

For example, in the case where the low-resolution graphic drawing plane recorded in the graphic data drawing memory 224 includes the 2K-image-equivalent image data and the high-resolution graphic data based on the script recorded in the HTML document is the 4K-image-equivalent graphic data, the image transform unit 231 performs the image expansion processing of doubling the longitudinal size and lateral size of the low-resolution graphic drawing plane recorded in the graphic data drawing memory 224.

With the image expansion processing performed by the image transform unit 231, the graphic drawing plane includes the graphic data in size the same as the original-resolution graphic data generated in accordance with the script in the HTML document.

### (Step S241)

When either the drawing processing of the high-resolution graphic data (the high-resolution graphic drawing plane), not accompanied with the resolution reduction processing at steps S221 and S222, or the drawing processing of the low-resolution graphic data (the low-resolution graphic drawing plane) with the resolution reduction processing at steps S231 to S233 is completed, the processing at step S241 is performed.

The processing at step S241 is performed by the composition unit 232 illustrated in Fig. 5.

The composition unit 232 performs the composition processing between the respective drawing planes each including the display-unit output data, corresponding to the characters, the still images, and the moving images stored in the character and image data drawing memory 205, namely, the character drawing plane 211, the still image drawing plane 212, and the moving image drawing plane 213, and the graphic drawing plane to which the image transform unit 231 has performed the expansion processing.

The character drawing plane 211, the still image drawing plane 212, and the moving image drawing plane 213 stored in the character and image data drawing memory 205 are generated in accordance with the description of the HTML document. The drawing planes are each high-resolution and include, for example, the 4K or 8K high-resolution data.

Meanwhile, the graphic drawing plane input from the image transform unit 231 is the high-resolution graphic drawing plane based on the description of the script in the HTML document in a case where the processing at steps S221 and S222 is performed.

In addition, in a case where the processing at steps S231 to S233 is performed, instead of the high-resolution graphic drawing plane based on the description of the script in the HTML document, the expanded data of the low-resolution graphic drawing plane with the resolution reduced is provided. In this case, the resolution remains low, but the image size is the same as that of the original-resolution graphic drawing plane acquired with the execution of the script recorded in the HTML document.

The composition unit 232 performs composition processing between the high-resolution character drawing plane 211, still image drawing plane 212, and moving image drawing plane 213 corresponding to the characters, the still images, and the moving images stored in the character and image data drawing memory 205, respectively, and either the high-resolution graphic drawing plane generated by the processing at steps S221 and S222 or the low-resolution graphic drawing plane generated and expanded by the processing at step S231 to S233.

### (Step S242)

At step S242, a composite image generated by the composition unit 232 as a result of the composition processing at step S241, is stored into the display frame buffer 233 illustrated in Fig. 5 and then the composite image is output to the display unit 250.

As described above, the processing based on the flow illustrated in Figs. 12 and 13 is according to the embodiment in which the necessity determination of the resolution reduction processing is performed and then the processing based on the determined result is performed in the drawing processing of the graphic data.

In the situation where the resource of the reception device 30 is sufficient, for example, in the case where the available resource for the drawing processing of the graphic data is sufficient and additionally the free capacity of the graphic data drawing memory is sufficient, the high-resolution graphic data is drawn without the reduction of the resolution in the drawing processing of the graphic data. The low-resolution graphic data is drawn only in the case where it is determined that the resource is insufficient.

Specifically, for example, it is determined whether the resolution reduction processing is performed, in response to the size of the graphic data drawn in accordance with the script described in the HTML document.

In addition, the processing is preferably performed in consideration of the resource situation varying in response to the data processing situation of the information processing device (the reception device 30).

The processing allows the graphic data output to the display unit, to be output remaining high-resolution in the case where the resource is sufficient, and to be output with the resolution reduced only in the case where the resource is insufficient, so that selective processing can be performed.

In both of the cases, output of the composite image including the graphic data generated with the execution of the script, can be certainly performed without delay.

### [7. Exemplary Configuration of Information Processing Device]

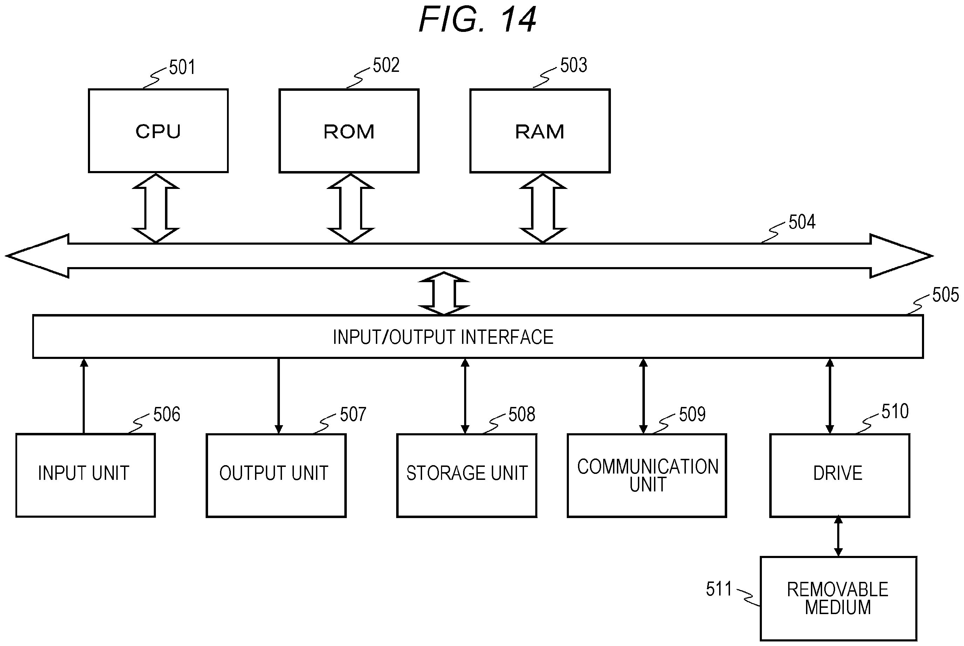

Next, an exemplary device configuration of the information processing device (the reception device 30) that performs the processing described above, will be described with reference to Fig. 14.

Fig. 14 illustrates an exemplary hardware configuration of a communication device applicable as the information processing device (the reception device 30).

A central processing unit (CPU) 501 functions as a data processing unit that performs various types of processing in accordance with a program stored in a read only memory (ROM) 502 or a storage unit 508. For example, the processing based on the sequence described in each embodiment described above, is performed. A random access memory (RAM) 503 stores, for example, the program performed by the CPU 501 and data. The CPU 501, the ROM 502, and the RAM 503 are mutually connected through a bus 504.

The CPU 501 is connected to an input/output interface 505 through the bus 504, and the input/output interface 505 is connected with an input unit 506 including various switches, a keyboard, a mouse, and a microphone, and an output unit 507 including a display and a speaker. The CPU 501 performs the various types of processing in response to a command input from the input unit 506, to output a processing result to, for example, the output unit 507.

The storage unit 508 connected to the input/output interface 505 includes, for example, a hard disk, and stores the program performed by the CPU 501 and various types of data. The communication unit 509 functions as a transmission and reception unit for data communication through a network, such as the Internet or a local area network, and furthermore a transmission and reception unit for a broadcast wave, to communicate with an external device.

A drive 510 connected to the input/output interface 505 drives a removable medium 511 including a magnetic disk, an optical disc, a magneto-optical disc, or a semiconductor memory, such as a memory card, to perform recording or reading of data.

Note that, data encoding or decoding can be performed as processing in the CPU 501 as the data processing unit, but a codec may be provided as dedicated hardware for performing encoding processing or decoding processing.

### [8. Summary of Configuration of Present Disclosure]

The embodiments of the present disclosure have been described in detail above with reference to the specific embodiments. However, it is obvious that a person skilled in the art may make alterations or replacements to the embodiments without departing from the scope of the spirit of the present disclosure. That is, the present invention has been disclosed in exemplified modes, and thus the present invention should not be interpreted in a limited way. The scope of the claims should be considered in order to judge the spirit of the present disclosure.

Note that, the technology disclosed in the present specification can also have the following configurations.
(1) An information processing device includes:
   a graphic drawing data generation unit configured to perform generation processing of graphic data; and
   a composition unit configured to combine the graphic data generated by the graphic drawing data generation unit and image data, to generate a composite image for display-unit output.
   The graphic drawing data generation unit generates low-resolution graphic data having resolution lower than resolution based on a description of a script, in the generation processing of the graphic data based on the script, and
   the composition unit generates the composite image for display-unit output, with expanded data of the low-resolution graphic data.
(2) According to the information processing device described in (1), the graphic drawing data generation unit stores the low-resolution graphic data that has been generated, into a graphic data drawing memory,
   an image transform unit performs data expansion processing of causing, in size, the low-resolution graphic data stored in the graphic data drawing memory to agree with high-resolution graphic data equivalent to the resolution based on the description of the script, and
   the composition unit generates the composite image for display-unit output, with the low-resolution graphic data expanded by the image transform unit.
(3) According to the information processing device described in (1) or (2), the graphic drawing data generation unit performs the generation processing of the graphic data based on the script described in a hyper text markup language (HTML) document.
(4) According to the information processing device described in any of (1) to (3), the graphic drawing data generation unit transforms a high-resolution-compliant coordinate system described in the script into a low-resolution-compliant coordinate system, to generate the low-resolution graphic data.
(5) According to the information processing device described in any of (1) to (4), the graphic drawing data generation unit transforms high-resolution-compliant coordinate data based on "canvas" being a specification of a script for drawing two-dimensional (2D) graphic data on a browser, or high-resolution-compliant coordinate data based on "WebGL" being a specification of a script for drawing three-dimensional (3D) graphic data on the browser, into low-resolution-compliant coordinate data, to generate the low-resolution graphic data.
(6) According to the information processing device described in any of (1) to (5), the graphic drawing data generation unit includes:
   an application execution unit configured to output a drawing order based on the description of the script; and
   a graphic data drawing processing unit configured to perform drawing processing based on the drawing order output by the application execution unit.
(7) According to the information processing device described in (6), at least one of the application execution unit and the graphic data drawing processing unit performs processing of transforming a high-resolution-compliant coordinate system described in the script, into a low-resolution-compliant coordinate system.
(8) The information processing device described in any of (1) to (7), further includes: a layout processing unit configured to determine a layout based on a style sheet described in a hyper text markup language (HTML) document.
   The composition unit performs composition processing of a plurality of different drawing planes generated in accordance with the layout determined by the layout processing unit.
(9) According to the information processing device described in any of (1) to (8), the graphic drawing data generation unit performs the generation processing of the graphic data to be displayed on a browser.
(10) According to the information processing device described in any of (1) to (9), the composition unit performs the generation processing of the composite image to be displayed on a browser.
(11) According to the information processing device described in any of (1) to (10), the graphic drawing data generation unit determines whether an available resource of the information processing device is a sufficient resource for generating high-resolution graphic data based on the description of the script,
   generates the high-resolution graphic data based on the description of the script in a case where determining that the available resource is the sufficient resource, and
   generates the low-resolution graphic data having the resolution lower than the resolution based on the description of the script in a case where determining that the available resource is not the sufficient resource.
(12) According to the information processing device described in (11), the graphic drawing data generation unit performs the processing of determining whether the sufficient resource for generating the high-resolution graphic data based on the description of the script is available, in response to a size of the graphic data generated in accordance with the description of the script.
(13) According to the information processing device described in (11) or (12), the graphic drawing data generation unit performs the processing of determining whether the sufficient resource for generating the high-resolution graphic data based on the description of the script is available, in response to a resource usage situation of the information processing device.
(14) The information processing device described in any of (1) to (13), further includes: a hyper text markup language (HTML) document processing unit configured to perform analysis processing of an HTML document received from a transmission device.
   The graphic drawing data generation unit executes the script included in the HTML document analyzed by the HTML document processing unit.
(15) An information processing method performed in an information processing device including:
   a graphic drawing data generation unit configured to perform generation processing of graphic data; and
   a composition unit configured to combine the graphic data generated by the graphic drawing data generation unit and image data to generate a composite image for display-unit output,
   the information processing method includes:
      generating low-resolution graphic data having resolution lower than resolution based on a description of a script, by the graphic drawing data generation unit, in the generation processing of the graphic data based on the script, and
      generating the composite image for display-unit output, by the composition unit with expanded data of the low-resolution graphic data.
(16) A program for causing information processing to be performed in an information processing device including:
   a graphic drawing data generation unit configured to perform generation processing of graphic data; and
   a composition unit configured to combine the graphic data generated by the graphic drawing data generation unit and image data to generate a composite image for display-unit output,
   the program causes:
      the graphic drawing data generation unit to generate low-resolution graphic data having resolution lower than resolution based on a description of a script, in the generation processing of the graphic data based on the script; and
      the composition unit to generate the composite image for display-unit output, with expanded data of the low-resolution graphic data.

In addition, the set of processing described in the present specification can be performed by hardware, software, or a combined configuration of the two. In a case where the processing is performed by the software, a program including a processing sequence recorded is installed into a memory in a computer built in dedicated hardware or the program is installed into a general-purpose computer capable of performing various types of processing, so that the processing can be performed. For example, the program can be previously recorded in a recording medium. In addition to installation from the recording medium into the computer, the program can be received through a network, such as a local area network (LAN) or the Internet, and then the program can be installed into a built-in recording medium, such as a hard disk.

Note that, the various types of processing described in the specification may be performed in parallel or individually in response to the throughput of the device that performs the processing or as necessary, in addition to being performed on a time series basis in accordance with the description. In addition, a system in the present specification is a logical aggregate configuration including a plurality of devices, but is not limited to a configuration including the constituent devices in the same housing.

### INDUSTRIAL APPLICABILITY

As described above, according to one embodiment of the present disclosure, a configuration in which low-resolution graphic data generated in accordance with a script is displayed in combination with high-resolution image data, is achieved.

Specifically, in performing generation processing of graphic data in accordance with the script described in an HTML document, a graphic drawing data generation unit generates the low-resolution graphic data having resolution lower than resolution based on the description of the script and stores the low-resolution graphic data into a drawing memory. An image transform unit expands the low-resolution graphic data in the drawing memory to transform the low-resolution graphic data by a size the same as that of high-resolution graphic data. After that, the low-resolution graphic data is output in combination with, for example, other high-resolution image data.

With the present configuration, the configuration in which the low-resolution graphic data generated in accordance with the script is displayed in combination with the high-resolution image data, is achieved.

### REFERENCE SINGS LIST

10 Communication system
20 Transmission device
21 Broadcast server
22 Advertising server
23 Data distribution server
30 Reception device
31 TV
32 PC
33 Portable terminal
50 Output image
101 Character and image drawing memory
102 Application execution unit
103 Graphic data drawing memory
104 Composition output unit
201 HTML document processing unit
202 Layout processing unit
203 Layout processing memory
204 Media data drawing processing unit (media renderer)
205 Character and image data drawing memory
211 Character drawing plane
212 Still image drawing plane
213 Moving image drawing plane
220 Graphic drawing data generation unit
221 Application execution unit (script execution engine)
222 Application execution work memory
223 Graphic data drawing processing unit (graphic renderer)
224 Graphic data drawing memory (graphic drawing plane)
231 Image transform unit
232 Composition unit
233 Display frame buffer
250 Display unit
301 Style sheet
302 Script
303 Body
501 CPU
502 ROM
503 RAM
504 Bus
505 Input/output interface
506 Input unit
507 Output unit
508 Storage unit
509 Communication unit
510 Drive
511 Removable medium

## Claims

1. An information processing device comprising:
a graphic drawing data generation unit configured to perform generation processing of graphic data; and
a composition unit configured to combine the graphic data generated by the graphic drawing data generation unit and image data, to generate a composite image for display-unit output,
wherein the graphic drawing data generation unit generates low-resolution graphic data having resolution lower than resolution based on a description of a script, in the generation processing of the graphic data based on the script, and
the composition unit generates the composite image for display-unit output, with expanded data of the low-resolution graphic data.

2. The information processing device according to claim 1, wherein the graphic drawing data generation unit stores the low-resolution graphic data that has been generated, into a graphic data drawing memory,
an image transform unit performs data expansion processing of causing, in size, the low-resolution graphic data stored in the graphic data drawing memory to agree with high-resolution graphic data equivalent to the resolution based on the description of the script, and
the composition unit generates the composite image for display-unit output, with the low-resolution graphic data expanded by the image transform unit.

3. The information processing device according to claim 1, wherein the graphic drawing data generation unit performs the generation processing of the graphic data based on the script described in a hyper text markup language (HTML) document.

4. The information processing device according to claim 1, wherein the graphic drawing data generation unit transforms a high-resolution-compliant coordinate system described in the script into a low-resolution-compliant coordinate system, to generate the low-resolution graphic data.

5. The information processing device according to claim 1, wherein the graphic drawing data generation unit transforms high-resolution-compliant coordinate data based on "canvas" being a specification of a script for drawing two-dimensional (2D) graphic data on a browser, or high-resolution-compliant coordinate data based on "WebGL" being a specification of a script for drawing three-dimensional (3D) graphic data on the browser, into low-resolution-compliant coordinate data, to generate the low-resolution graphic data.

6. The information processing device according to claim 1, wherein the graphic drawing data generation unit includes:
an application execution unit configured to output a drawing order based on the description of the script; and
a graphic data drawing processing unit configured to perform drawing processing based on the drawing order output by the application execution unit.

7. The information processing device according to claim 6, wherein at least one of the application execution unit and the graphic data drawing processing unit performs processing of transforming a high-resolution-compliant coordinate system described in the script, into a low-resolution-compliant coordinate system.

8. The information processing device according to claim 1, further comprising: a layout processing unit configured to determine a layout based on a style sheet described in a hyper text markup language (HTML) document,
wherein the composition unit performs composition processing of a plurality of different drawing planes generated in accordance with the layout determined by the layout processing unit.

9. The information processing device according to claim 1, wherein the graphic drawing data generation unit performs the generation processing of the graphic data to be displayed on a browser.

10. The information processing device according to claim 1, wherein the composition unit performs the generation processing of the composite image to be displayed on a browser.

11. The information processing device according to claim 1, wherein the graphic drawing data generation unit determines whether an available resource of the information processing device is a sufficient resource for generating high-resolution graphic data based on the description of the script,
generates the high-resolution graphic data based on the description of the script in a case where determining that the available resource is the sufficient resource, and
generates the low-resolution graphic data having the resolution lower than the resolution based on the description of the script in a case where determining that the available resource is not the sufficient resource.

12. The information processing device according to claim 11, wherein the graphic drawing data generation unit performs the processing of determining whether the sufficient resource for generating the high-resolution graphic data based on the description of the script is available, in response to a size of the graphic data generated in accordance with the description of the script.

13. The information processing device according to claim 11, wherein the graphic drawing data generation unit performs the processing of determining whether the sufficient resource for generating the high-resolution graphic data based on the description of the script is available, in response to a resource usage situation of the information processing device.

14. The information processing device according to claim 1, further comprising: a hyper text markup language (HTML) document processing unit configured to perform analysis processing of an HTML document received from a transmission device,
wherein the graphic drawing data generation unit executes the script included in the HTML document analyzed by the HTML document processing unit.

15. An information processing method performed in an information processing device including:
a graphic drawing data generation unit configured to perform generation processing of graphic data; and
a composition unit configured to combine the graphic data generated by the graphic drawing data generation unit and image data to generate a composite image for display-unit output,
the information processing method comprising:
generating low-resolution graphic data having resolution lower than resolution based on a description of a script, by the graphic drawing data generation unit, in the generation processing of the graphic data based on the script, and
generating the composite image for display-unit output, by the composition unit with expanded data of the low-resolution graphic data.

16. A program for causing information processing to be performed in an information processing device including:
a graphic drawing data generation unit configured to perform generation processing of graphic data; and
a composition unit configured to combine the graphic data generated by the graphic drawing data generation unit and image data to generate a composite image for display-unit output,
the program causing:
the graphic drawing data generation unit to generate low-resolution graphic data having resolution lower than resolution based on a description of a script, in the generation processing of the graphic data based on the script; and
the composition unit to generate the composite image for display-unit output, with expanded data of the low-resolution graphic data.
